# EUROPEAN PATENT APPLICATION

(11) **EP 2 572 592 A1**
(43) Date of publication of application: **27.03.2013**
(21) Application number: 11782793.1
(22) Date of filing: 19.05.2011
(51) Int. Cl.: A23L 3/015, A23L 3/26

(54) **METHOD AND APPLIANCES FOR LOW TEMPERATURE PASTEURISATION OF LIQUID FOODS AND REMOVAL OF OXYGEN FROM LIQUID FOODS BY DECOMPRESSION AND/OR HIGH LINEAR OR ROTARY ACCELERATION**

(30) Priority: 21.05.2010 BR PI1002602
(71) Applicant: Duarte Vieira, Francisco José, Cep. 30380-530 Luxemburgo - Belo Horizonte - MG (BR)
(72) Inventor: Duarte Vieira, Francisco José, Cep. 30380-530 Luxemburgo - Belo Horizonte - MG (BR)
(74) Representative: Luppi, Emanuele
(86) International application number: PCT/BR2011/000161
(87) International publication number: WO 2011/143731

(57) **Abstract**

The process and equipment for sterilizing and removing oxygen from liquid foods at low temperature through decompression and/or great linear or rotatory accelarations, object of this Patent, advances the State of the Art for introducing two innovative physical principles for sterilizing liquid foods, at cold:
- The first is consisted of subjecting them to great and sudden decompressions, and the second is consisted of imposing great linear, rotatory accelerations, or both combined, over them.

The two principles can be applied at any order of occurrence or simultaneously.

In consequence of the pieces of equipment used for carrying out the object of this Patent, it also comprises the performance of sterilization and removal of gaseous Oxygen dissolved in these liquid foods and liquid extracts from any vegetable part, preserving their natural colors, tastes, odors, enzymes, vitamins, antioxidants and other nutrients.

The pieces of equipment used for carrying out the object of this Patent can use microwave irradiation, ultrasound and heterogeneous photocatalysis, through white light/ultraviolet light irradiation, over its surfaces covered by resins and/or photocatalytic ceramics containing nanostructured particles as auxiliary resources and they can be applied alone or combined in any way.

Such sudden and great decompressions can reduce the pressures so that they reach around 20,000 times lower than the initial pressures, existing before the decompression - and they cause a great and sudden expansion of the gases, whether natural or insufflated, present in the cytoplasmic liquids and in the liquids inside the organelles of the contaminative organisms and by explosion of these structures, causing death of all of them, being that such process can be carried out at temperatures close to the freezing points of the liquids to be treated.

The great linear, rotatory accelerations, or both combined, may reach up to 1,000 times the gravitational acceleration on the Earth's surface, and they are done by means of frontal, tangential or oblique shocks with the pieces of the equipment, which have lethal effects on the cell membranes, on the organelles and their membranes and, especially, on the cytoskeleton.

Such accelerations can also be acquired by subjecting batches of the liquids being treated to very violent turbulences.

## Description

### Fields of the Patent

- Cold sterilization of liquid foods through decompression.
- Cold sterilization of liquid foods through great linear, rotatory accelerations or any combination of them.
- Cold sterilization and Oxygen removal through great decompressions of any liquid food and of liquid extracts from any vegetable part, preserving their natural color, taste, smell and their enzymes, vitamins, antioxidants and other phytonutrients.
- Sterilization and homogenization of vegetable extracts by the destruction of the cell walls, cell membranes and their organelles at low temperatures through the decompression and/or great linear or rotatory accelerations.
- Cold sterilization of liquid foods through decompression and/or great linear or rotatory accelerations, aided by microwave irradiation, ultrasound and heterogeneous photocatalysis through white light and/or ultraviolet irradiation over surfaces covered by catalytic resins and/or ceramics containing nanostructured particles, applied alone or combined in any form.

### State of the Art

The continuous discoveries of Man's ancestors fossils drew the origin of the Homo gender back to 5 million years ago; thus, it took man 5 million years to reach the current population of about 6 billion individuals.

Under favorable conditions, one single bacterium, dividing itself by scissiparity every 20 minutes, reaches this population in only 11 and a half hours.

The current human population is a result of learning how to get and preserve food, among other factors.

For Man, obtaining food in abundance had to wait until the beginning of the past 100 centuries, with the Agricultural Revolution and the beginning of the domestications of animals purposed to food intake.

Obtaining and preserving food have turned out to be, since the earliest years of Man, a non-stopping competition against other men, animals and, mainly, against insects and microorganisms.

The work and the mortal risks of harvesting or hunting had to be continuous as the storage for the hard times was unable to be carried out due to food decay. Due to putrefaction, both vegetables and animal carcasses become unsuitable for consumption in a short time.

Certainly, the attention given to the accidental means was the inaugural source of the protein preservation technologies: - the rests of fish left on the shore, on rocks heated by the sun and covered by salt proved to be preserved and eatable for several days.

Meats cooked over the heat and steam of green wood was preserved for several days; they would last even more if they were soaked in hot, melted fat of the animal and kept in the first ceramics.

Heat, as it has been until today, was the main weapon of man in his competition for food against bacteria.

During the Industrial Revolution, canned food cooked inside the cans themselves for around 30 minutes at temperatures that reached 120°C and then were sealed were developed in England.

The finding of the reason for the food being preserved under such conditions is due to the French Louis Pasteur (1822 - 1895), founder of Microbiology Science and Practice, who found the reason of food decay, the "mystery" of fermentation and great part of diseases, which was the activity of microorganisms.

Due to Pasteur's studies, the food preservation technology firmed itself scientifically: - its preservation was a result of the death or suspension of the vital activity of microorganisms like bacteria or fungi obligatorily followed by the prevention from recontamination.

Going on with his researches, Pasteur developed a technology for eliminating bacteria from liquid foods such as wine, milk, beer, juice, among others, which happened to be called "pasteurization" and that consists of the elevation of the liquid temperature up to around 70°C followed by a quick lowering of its temperature and, after that, by keeping it in hermetically sealed containers, preferably cooled ones.

Pasteur developed the "pasteurization" technology based on great scientific fundaments, as he was being pressed by the French government to solve a critical economic problem of the time: - wine production, which was fundamental to the French economy, was suffering with the acetic fermentation. Boiling the grape juice before the wining process would have been simpler, once the researches had shown that the acetic fermentation was completely eliminated through boiling and, in fact, Pasteur experimented such way, but the high temperatures of the ebullition eliminated all the precious molecules that made the French grapes the ones to produce the most valuable wines in the world.

Pasteur searched a way to make such sterilization at a temperature that was lower than the water ebullition point because he learned that it was not possible to obtain good quality wines if the grape juices had been heated up to the water ebullition temperature before.

Since the birth of the biggest weapon against bacteria that contaminate liquid foods man has ever invented, it has been understood that pasteurized products suffer losses of valuable compounds because of the high temperatures during the process.

The pasteurization process has as its practical, scientific core the fact that, by rising the temperature, the microorganisms trigger their duplication mechanisms; as the temperature is lowered abruptly, such mechanisms interrupt their duplication process irreversibly, thus stopping the survival or the cell reproductive possibility of the microorganisms.

Certain microorganisms that contaminate foods do not necessarily cause food putrefaction or fermentation, being, therefore, imperceptible, but they can subsist until they find favorable conditions for reproduction, coming to cause pathologies in those who consume them, such as the gender bacteria like Escherichia, Salmonella and others; the protozoan Trypanosoma cruzi, derived from hematophagous hemiptera excretion, being able to orally contaminate the consumers of the açaí palm tree fruit juices.

Pasteurization is the worldwide leading process for milk preservation for being fast, safe, automatic and energetically economic..

Pasteurization is not sterilization; during pasteurization, nearly 99.5 % of the contaminating microorganisms are eliminated and the product must be kept under refrigeration, which brings high costs for transportation and storage. The thermal sterilization is an evolution of the pasteurization and during the UHT - "Ultra High Temperature" modem process, the temperature goes up to 140°C; however, the process high temperatures deeply change the natural products treated by it, changing their color, taste and smell and destroying their natural active principles.

Regarding the milk treated by the UHT process, its shelf life discards refrigeration and lasts more than 120 days; however, the milk is so modified that it is not useful for the production of any dairy goods.

There are other sterilization technologies at lower temperatures: - filtering, irradiation of liquid foods inside glass containers by Gama Rays gotten from the natural radiation of Cobalt 60 or by beams of accelerated electrons, elevation of the pressure over the liquid foods already in the flexible polymer containers, in hyperbaric chambers, at up to 600 Mpa - or 6,000 atmospheres ( which is equivalent to 10 times the pressures to be fought to extract the oil from the "Pre-Salt"), being that both processes can be carried out over foods at room temperature.

The gama radiation and the bombardment of beams of accelerated electrons destroy the DNA and the RNA of the microorganisms that, besides being unable to reproduce, die.

The application of hydrostatic pressures at around 6,000 atmospheres destroys the microorganisms.

Each of these technologies has problems such as costs, process speed and investment costs, which make them have a derisory participation on the market.

### Reviews of the State of the Art

The changes of man's pace of life stemmed from the creation of megalopolis gave birth to the industrialized food market and to the general use of chemical products, such as preservatives, colorants, acidulants, stabilizers, thickeners etc. Those who fight for a healthier food diet have shown the correlation between fiberless foods and colon cancer and they have reported the losses of the most valuable active principles of the foods because of the high temperatures of the industrial processes; to all this the food industry replied with the addition of fibers, minerals, vitamins etc.

By evolving their ideas, the fans of a food diet that is as much natural as possible claim that vegetable foods like fruits, stems, leaves, roots, dried or sprouted seeds must be consumed as soon as possible, right after harvest, in order to keep their most valuable molecules intact, and they cannot receive the addition of any kind of chemical product, they cannot be in contact with air Oxygen, they cannot be even heated, as the heating and oxidation destroy the enzymes, vitamins and other active molecules, such as the antioxidants, which are typical of each vegetable specificity.

Foods that have the properties described above are known as "superfoods", however, until the appearance of this Patent, the industry has not been able to produce such foods due to the high temperatures needed for the pasteurization. The powerful technology of pasteurization cannot meet the requirements mentioned above, for, in this process, the great elevation of the temperature, mainly when regarding milk and fruit juices, modifies the taste, the color and the smell and it destroys great part of the enzymes, vitamins, antioxidant molecules and almost all the active principles that are characteristic in the live or recently picked vegetable.

In sum, we focus our criticism on the State of the Art of the pasteurization of liquid foods because it is applied to the 440 billion liters of milk and to the 130 billion liters of beer produced yearly.

The process and equipment for sterilizing and removing oxygen from liquid foods at low temperature through decompression and/or great linear or rotatory accelarations, object of this Patent, by using great cold decompressions and/or great accelerations, releases the Man from the undesirable heating effects for sterilizing liquid foods and enables the preservation of all their valuable natural properties like it has never done before in human history.

### Advances in the State of the Art brought up by the object of this Patent

This Patent is the result of researches in the following areas:
1 - search for an alternative for Pasteur's work, who stated that the minimum temperature for preserving foods through heat is around 70°C and that it is impossible to do it at lower temperatures than this one;
2 - the relevance of preserving the most valuable molecules of natural foods, from CasimiroFunk's work, the discoverer of the powerful effects of certain substances existing in the natural foods which are destroyed by the industrial processes applied to them, such substances he named "vitamins"; currently, the discovery and preservation of the antioxidants has similar relevance as the discovery of the vitamins had in their time;
3 - Paul Bert's and J. S. Haldane's studies on the causes of the "diver's disease";
4 - search for other simple physical, economical and lethal phenomena about microorganisms capable of acting at low temperatures, which led the author to the following innovations:
   a - through great and sudden decompressions of the gases present inside the cells of the contaminating microorganisms, making their cell membranes and their organelles explode, killing them at cold and preserving all their "in natura" characteristics,
   b - subject the cells of the contaminating microorganisms to accelerations that are up to 1,000 times the Gravity acceleration on Earth's surface, accelerations that may produce linear, rotatory movements or both combined, in order to destroy their cytoskeleton and their organelle architecture,
   c - applying ultrasonic waves, electromagnetic microwaves and generating a heterogeneous photocatalysis by means of ultraviolet or white light irradiation over surfaces containing polymer layers or ceramics containing nanostructured compounds, such as Silver, Titanium Dioxide and others, for destroying the contaminating microorganisms cell membranes, as auxiliary phenomena to the cold sterilization.

Regarding Pasteur's studies, the one described above is enough; further we will briefly describe Casimir Funk's, Paul Bert's and Haldane's studies and, throughout this Report references to other scientific bases of the physical-chemical phenomena this Patent is based upon will be made.

### Vitamin: - the vital substances

Unforgettable are the discoveries made by Casimir Funk, English doctor in the Colonial India, in charge of a Shelter-Hospital for terminal patients, who got sick because of a strange tropical disease, also known as beri-beri; as he powerlessly watched his patients emaciate, he saw through his office window the sick hens in the hospital's hen house, as they were treated with the same peeled rice given as food to his patients, whereas, on the other side of the fence, the hens belonging to the hospital employees which were fed with the residues from the treated rice, which was mandatory by the English law, were fat and healthy.

In one simple, definitive experiment, Casimir Funk started feeding his patients with brown rice again and saw, in few weeks, the hospital releasing almost all his patients, who were "miraculously" cured.

Later, Funk extracted a compound of the amino group he named "vitamins" from the the rice treatment residues and he confirmed the ancient knowledge about the valuable natural properties of foods, which get lost throughout the industrialization process.

Funk's work gave birth to the micronutrient attention era, that is, health fundamental compounds that are present in foods at minimum quantities and that are destroyed by the temperature rise and by other industrial processes.

### The "diver's disease"

Modem man only started to question the "diver's disease" when the railroads needed pillars with submerged bases to support bridges over rivers and seas.

The workers, with their rudimentary equipment of the time, usually pneumatic boxes, or special clothes called "diving suits", were able to dive deeper and deeper in order to build the pillars, staying under water and breathing air under pressure for long periods of time without suffering from anything while diving, but when they returned to the surface, they were attacked by a mysterious disease with numberless harms and came to sudden death.

The French scientist Paul Bert, in 1878, showed that such harms just took place if the divers stayed under water for long periods of time breathing insufflated air under high pressures, which were necessary to fight the hydrostatic pressures, went back up quickly to the surface.

Necropsies confirmed the scientist's observation: - the ones who died from the "diver's disease" had the blood circulation blocked by the formation of big gas bubbles in the blood vessels as an effect of the decompression, like when opening a bottle of champagne, the gas dissolved in the liquid under pressure suddenly expands forming big bubbles, according to the General Gas Law, in order to occupy a larger volume in the atmospheric pressure.

The same as the slow opening of a bottle of champagne allows the bubbles to come out slowly, without forming a profusion of big bubbles, the "diver's disease" could be completely avoided if the divers went back to the surface slowly; the slow ascension led to a slow decompression and, thus, the insufflated gases that remained in the solution of the body liquids under pressure were eliminated by the lungs before large gas bubbles got together, through coalescence, inside the vessels and tissues, blocking the distal blood irrigation to these vessels.

Later, with the great commercial and strategic value of dives, which were longer and longer and deeper and deeper, the British government assigned Professor John Scott Haldane to solve the problem; he elaborated a table that determined the "periods of time of ascension due to depth and permanence time underwater", solving the problem pragmatically, that is, no one died after emerging.

Soon after eliminating the acute picture of the "diver's disease", which happened right after emerging, the "diver's disease" was forgotten and it just caught the scientists' attention again when, years later, its chronic effects appeared in the form of several harms that attacked the professional divers and reduced their lifetime span in the long term.

Just like Bert's, Haldane's work, with outstanding practical outcomes, was focused on the systemic and macroscopic causes of the disease, that is, gas embolisms that were blatant even to the naked eye, on the necropsied corpses. Researches on the diver's chronic diseases had to widen their observation level to the histological level, being determined, for instance, that the chronic diseases of the long bone epiphysis were caused by the expansion of the gases in the reduced bone tissue spaces, which, for being little elastic, squeezed the local arterioles and venules and blocked the blood circulation, with a consequent ischemic death of the cells in the region.

New regimes of diving and ascending as well as new gases - like mixes of Helium, Nitrogen and Oxygen, called "Trimix Gas" - started to be used and, thus, the chronic harms derived from diving could be prevented by a periodic follow-up of the divers' health through bone x-rays.

Once the disease was controlled, the scientific interest in the issue was again reduced and it stopped on the histological level.

The object of this Patent is an advance regarding these pioneers' studies and it applies the gas expansion principles to the microscopic level, that is, intracellular and organelle, in order to kill the cells by means of explosion at cold.

The first of the two core principles of the process and equipment for sterilizing and removing oxygen from liquid foods at low temperature through decompression and/or great linear or rotatory accelarations, objects of this Patent, is consisted of producing a great and sudden decompression - the pressures can reach up to 20,000 times lower than the initial pressures existing prior to the decompression - in order to cause a sudden and great expansion of the gases, whether natural or insufflated, which are present in the cytoplasmic liquids and in the liquids inside the organelles of the contaminative organisms and to cause the death of all of them, being that such process is carried out at low temperatures that can be close to the freezing points of the liquids to be treated in order to preserve all the molecules of the nutrients that get lost with the rising of the temperature in the pasteurization method.

The second of the two core principles of the process and equipment for sterilizing and removing oxygen from liquid foods at low temperature through decompression and/or great linear or rotatory accelarations, objects of this Patent, is consisted of subjecting the treated-to-be liquids, shaped in droplets or fine sprays, or the great bunches of liquids, to great linear or rotatory accelerations, or both combined, which can get to 1,000 times the gravitational acceleration on Earth's surface, through frontal, tangential or oblique shocks with the pieces of the equipment, which have lethal effects on the cell membranes, on the organelles and their membranes and, mainly, on the cytoskeleton and organelle architecture of the contaminative organism cells, as it will be properly described further herein.

The two core principles of the process and equipment for sterilizing and removing oxygen from liquid foods at low temperature through decompression and/or great linear or rotatory accelarations, objects of this Patent, bring significant advances to the State of the Art by being consisted of two extremely quick ways of sterilizing liquids, which can take such a short time as milliseconds, they are safer and more economical relative to the investments on equipment, workforce and energy, if compared to the pasteurization, which is the leading technique.

Pasteurizing is not sterilizing.

Sterilizing - as its own name says, is "the act of becoming sterile, without allowing life"- it is a dicothomic phenomenon: - either it is perfect and all the organisms are killed or it is not sterilization.

Pasteur, in his famous and definitive public presentation of the inexistence of the spontaneous generation phenomenon, would have lost the question if one single microorganism had remained alive in the solution he used in the presentation, because the recovery of the contaminative organism population leads to their great growth in number in just a few hours.

In Pasteur's presentation, if there were one single surviving bacterium that reproduced by scissiparity every 20 minutes, in only 11 and a half hours the descending population would be that of 6 billion individuals.

The great and sudden decompression that causes the expansion of the gases inside the microorganisms can be undertaken in the following ways:
a - great and sudden increase of the volume above the surface of the treated-to-be liquids by the displacement of a piston,
b - suction of the gases found inside the containers, in which the treated-to-be liquids are lying, by blowers or cylinders in whose interiors the pistons move,
c - by releasing the treated-to-be liquids in the form of jets or spray inside the vases at such low pressures that they can get to lower than 5 thousandth of the atmospheric pressure, being that these such low pressures are kept by the suction carried out by the blowers or cylinders in whose interior the pistons move.

The gases present inside the contaminative microorganisms of the liquids to be treated through sudden and great decompressions or through great linear or rotatory accelerations may be originated by one, more than one or, simultaneously, by all the reasons described below:
1 - metabolic origin, by cellular breathing that generates especially the Carbon Dioxide;
2 - by the diffusion of the gases present in the treated-to-be liquids, which penetrate inside the cells and their organelles because they go through their membranes by means of a passive diffusion as a consequence of the pressure over the treated-to-be liquids;
3 - artificially, like the object of this Patent, by gasification, carried out in any way, at any pressure, before subjecting the treated-to-be liquids to the great, sudden decompressions.

When the liquids to be treated by the object of this Patent are lying at atmospheric pressure, the metabolic gases and the ones diffused through the membranes into the microorganism cells are found dissolved in these liquids; when a prior gasification of the treated-to-be liquids is done under pressures that can reach up to 200 kilograms per square centimeter, there will be, simultaneously, fast or slowly, dissolved gases or comprised gases inside the microorganisms.

The great and sudden gas expansions caused by the decompression in the containers, where the treated-to-be liquids lie, can be done at any rate, being possible to make the intracellular gas volumes expand suddenly, from few times to around 20,000 times of their initial volumes.

Previously subjecting the treated-to-be liquids to gasification under pressures of about 200 kilograms per square centimeter or more makes the contaminative microorganisms of the liquids to be treated by the process and equipment for sterilizing and removing oxygen from liquid foods at low temperature through decompression and/or great linear or rotatory accelarations suffer the effects of the decompression that are up to 200 times greater than when, from the atmospheric pressure, they themselves go through decompression of up to one hundredth of the atmospheric pressure.

High rates of sudden decompression after the infusion of gases under high pressure inside the microorganisms, whether they are viruses - like the aphthosis, occasionally present in the milk - or bacteria in their living forms or encapsulated, fungi and their spores, or protozoan - makes them all, without exceptions, explode at cold, through the sudden decompression, and die.

Previous gasification can be done in the treated-to-be liquids with neutral gases like Nitrogen alone or mixed with other gases that are usual to the liquid food industry, like the Carbon Dioxide, by several ways, such as decompression by cylinders and pistons, by rotary pumps or by the permanence in gas tanks and it can make this gasification get to pressures of up to 200kg per square centimeter or more, being that these pressures can be applied slowly or fast.

In the slow way, the treated-to-be liquid foods are kept in gasification vessels, at rest or agitation, as the gases are injected slowly until they reach high pressures and they stay as long as it takes, which is specific for each kind of gas and liquid, so that the gases get diffused inside the cells (and the organelles) of the contaminative organisms, until their pressure inside these structures get equivalent to the gasification pressure present in the gasification vessels.

In the fast way, the liquids are quickly compressed, together with the gases, by pistons inside the pressurizing cylinders, injector nozzles or high pressure rotary output pumps, the gasification in the interior of the contaminative microorganism cells being, in this case, a fast process that is, by itself, harmful to them.

Whenever the decompression is carried out, by means of any of the several ways described in this Patent, in values that sterilize the treated-to-be liquids, the pieces of the equipment where the phenomenon occurs also get sterilized; this means that the pieces of equipment of the object of this Patent are self-sterilizable.

Such self-sterilization of the equipment is of a great economic value, as the costs of chemical products for the hygienization of the industrial sterilizing equipment are high and so is the productivity loss due to the time spent performing such operations.

The pieces of the equipment of the object of this Patent that do not stay in the areas that suffer great decompressions or great accelerations are previously sterilized, as it is in the State of the Art applied to the food industry and as it will be described further in this Report of the Patent, they receive an aid from resources based upon heterogeneous photocatalysis provided with resins and/or ceramics with specific nanostructured substances, whether in the presence, or not, of ultraviolet light or white light.

The sudden and lethal gas expansion inside the cytoplasms, as well as inside the cell organelles, the first of the two core principles, objects of this Patent, it approximately complies with the General Gas Law, in which the volume "V" of a certain gas mass, at a temperature "T", can be expressed by the equation V = nRT/P, where "n" is the number of gas moles, "R" is the Universal Gas Constant and "P" is the initial pressure of the gas in the system under observation.

Through this equation, it can be noted that at the same "T" temperature, when "P" is reduced, "V" proportionally increases.

The two core principles, in which the innovations of the objects of this Patent are based upon, may have their bactericidal power increased by the application, right before or simultaneously, of one or more than one or of all the four ways, combined anyhow, cited as follows:
First way: - slow or fast previous gasification, under any pressure, of the liquids to be treated;
Second way: - irradiation of the liquids to be treated, before or during the process, by ultrasonic waves at several frequencies, from 30 KHz to 5 MHz or more;
Third way: - irradiation of the liquids to be treated, before or during the process, by electromagnetic microwaves, preferably at frequencies of 2,450 MHz;
Fourth way: - ultraviolet light or white light irradiation over the surfaces covered by resin or ceramic pellicles with suitable nanostructured compounds, such as metallic Silver, Titanium Dioxide, Zirconium Dioxide, among others, in order to produce the heterogeneous photocatalysis with a high bactericidal power;

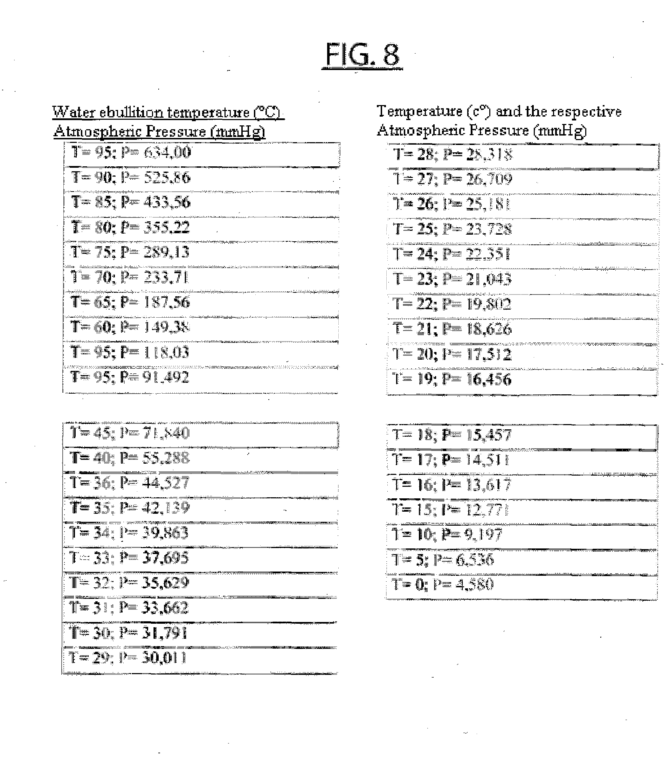

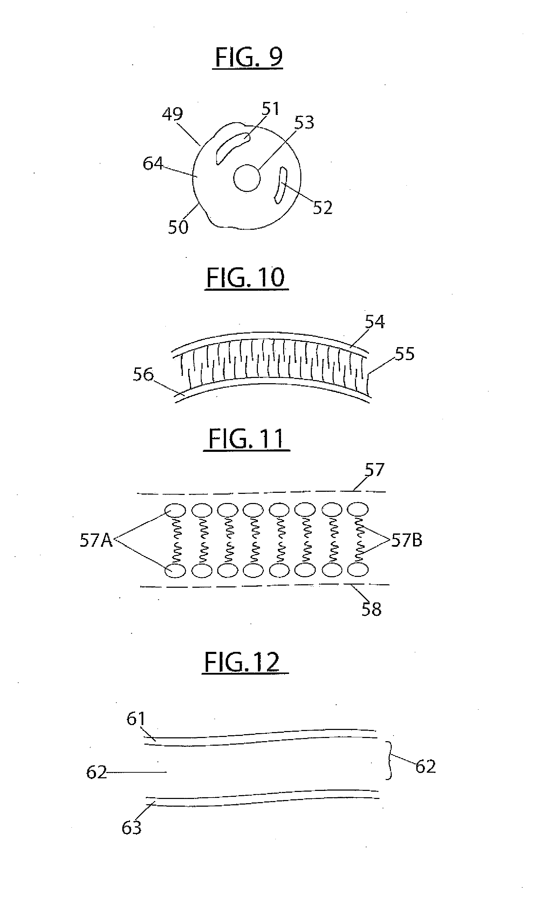

The scientific references on which the author based the regarding object of this Patent are about the following:
1 - the effects of pressure on the water ebullition temperature and its effects on the cells, according to the Table shown in Figure 8;
2 - the cell morphology, according to Figures 9, 10, 11, 12 and 13, which schematically show an eukaryotic cell, the molecular structure of its membranes and the cytoskeleton, such structures that do not bear the consequences of the physical attacks of the object of this Patent that cause the death of the cells;
3 - the interactions between the ultrasonic waves and the cells and liquids in which they are immersed;
4 - the interactions between the microwaves and the cytoplasmic liquids, the cell membranes and the organelles of the contaminative microorganisms of the liquids to be treated;
5 - the bactericidal effects of the ultraviolet light or the white light irradiation on the resin or ceramic pellicles containing nanostructured substances in order to produce heterogeneous photocatalysis;
6 - the lethal effects of the great accelerations on the cell organelles.

### Influence of the pressure over the water ebullition temperature

The great and sudden decompression, which causes a great and sudden expansion of the cytoplasmic gases in the microorganisms, also causes, at the same time, the sudden ebullition of the water at low temperatures, which is also lethal to the cells.

The sudden vaporization of the cytoplasmic water along with the great expansion of the natural or insufflated gases in the cytoplasm and in its organelles destroy the cell and organelle membranes of the cell transportation system, thus destroying the homeostasis and killing the cells.

A part of the Table "Water Ebullition Temperature due to Pressure" is shown in Figure 8; in it we can see that, under the very low pressures that occur in the process and equipment for sterilizing and removing oxygen from liquid foods at low temperature through decompression and/or great linear or rotatory accelarations, the water contained in the cytoplasm, which reaches up to 90% of the weight of the microorganisms, also vaporizes suddenly.

By data interpolation the Table in Figure 8, we can see that, at the pressure of 7.6mm Hg, which corresponds to a hundredth of the atmospheric pressure, the water ebullition temperature is of only 7 degrees Centigrade; if the decompression is being undertaken at around 25 degrees Centigrade, at a pressure of 7.6 mm Hg, despite such low temperature, the water enters ebullition, at cold, with a great and quick expansion as it becomes vapor, which enhances the lethal effects of the gas expansion on the microorganism cells.

### Morphology of the bacterial cells and of their membranes; membranes electrical potential

Figure 9 is a schematic frontal cut of an eukaryotic cell (49) with its cell membrane (50), any cytoplasmic organelle (51), the cell nucleus (53) and a mitochondrion (52), the "power plant of the cell", such organelle also being limited by a membrane that is similar to its cell membrane (50), that absorbs the Oxygen passively diffused from the environment into the interior of the cytoplasm through the cell membrane (50) for the production of the energy needed to the processes and that produces the oxidation processes, the Carbon Dioxide, as a result in a reaction that is inverse to that of the photosynthesis.

The presence of these two gases inside the mitochondrion (52) and the cytoplasm (64) is the attacking target of the first two core principles, objects of this Patent, that through a great and sudden decompression, will make them largely expand and will explode the cell membrane and the membrane of its organelles, thus killing the cell.

Figure 10 schematically shows the composition of the phospholipid bilayer of the cell membrane; in it, we can see the external hydrophilic phospholipid bilayer (54), the internal hydrophilic phospholipid bilayer (56) and the intermediate hydrophobic lipidic layer (55); the hydrophilic character of the hydrophilic layers is due to the fact that the polarized phosphate radicals lie there whereas the hydrophobic character of the intermediate layer is due to the neutral character of the long-chain fatty acids, as detailed in Figure 11, as follows.

In Figure 11, we can see, schematically, the molecular level of the phospholipid bilayer formation, of the cell membrane, the phosphate radicals (57 A) and the long-chain fatty acids (57 B), whose structures make the hydrophobic fatty acids (57B) act as electric isolators between the cell external region (57), which is in contact with its environment and the organized internal region (58).

It can be stated that the phospholipid bilayer structure, which forms the cell membrane, separates the "chaos" from the extremely organized intracellular setting; outside the membrane, the chaos; in its interior, the life, the order.

The phospholipid bilayer is selectively permeable; however, the entry of the molecules and ions present in the environment into the cell - which happens passively, from the cellular point of view, as a consequence of the osmotic pressure - is counterbalanced by the activity of the active transportation through the membrane, which happens both from the inside to the outside and from the outside to the inside.

The so-called "Potassium and Sodium pump System" makes the Potassium concentration be higher outside than inside the cell and the inverse regarding the Sodium.

Such differences of ionic gradients between the two sides of the membrane generate an electrical potential of about 70 thousandth of Volt between them, with the external phospholipid layer being positive and the internal one being negative, and the hydrophobic, fatty acid intermediate region being the isolating layer.

According to Figure 12, such organization acts as capacitor plates, which keep a potential difference between the two conductors separated by an isolator, transparent to the electric field, that is, a dielectric; in Figure 12 we can see, schematically, the upper plate (61) of the capacitor, the lower plate (63) of the capacitor, and the dielectric material (62).

However, if we closely observe such "capacitor", its apparently insignificant potential difference, is, actually, surprising when knowing that the thickness of the layer of the long-chain fatty acid is only 3.5 nanometers thick, which means an electric field of 200,000 Volt/centimeter.

It is by disturbing this electric field that the electromagnetic microwaves will disturb the capacity of the cell membrane to separate the internal and external settings of the cell, destabilizing them; when this occurs soon before or at the same time as the internal gases are expanding hundreds of times, as in the operational conditions of the process and equipment for sterilizing and removing oxygen from liquid foods at low temperature through decompression and/or great linear or rotatory accelarations, the cells die by the destruction of its structural organizations.

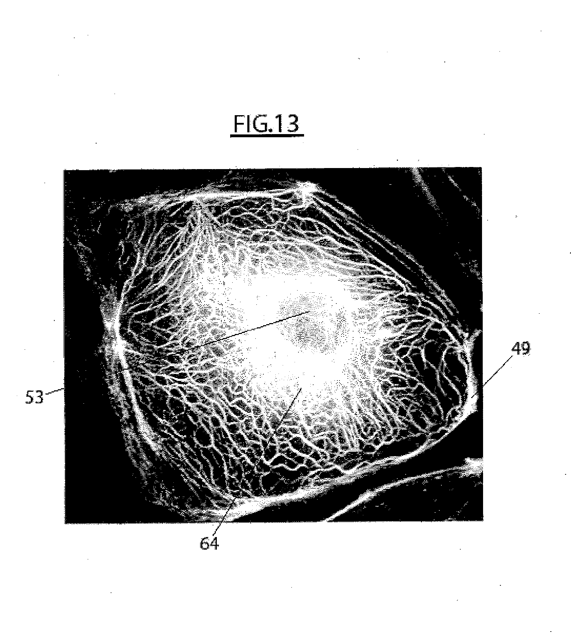

Figure 13 shows, in an immunofluorescence photograph in a dark area, one of the most complex and dynamic organelles of the cell structure: - the cytoskeleton (64) of the cell (49) with its nucleus (53). The cytoskeleton is consisted of fibrillary protein complexes formed by the polymerizations of the proteins; its functions are countless, among which we will mention:
a - coordinating the spatial distribution, that is, establishing the organelle architectures inside the cell and establishing its correct anatomophysiology, once the cellular physiology is extremely dependent upon the spatial relations between its organelles;
b - keeping the cellular shapes, typical of the species;
c - providing the cellular movements;
d - providing the support for the physical and spatial organization of the cell itself and with the neighboring ones;
e - providing cell resistance against the mechanical influences performed by the environment;
f - receiving and sending communication between the cell and the environment by means of messenger molecules and noticing contact forces, temperature, pH, salinity and the presence of other cells; cancers that form tumors, in which the reproduction of metaplastic cells are not inhibited by the contact or pressure of other cells, are currently considered metabolic diseases of the cytoskeleton, which keeps forming the aster needed for the mitosis, in spite of receiving information from the outside for not doing so.

It is easy to notice that, when the cells are subjected to the accelerations, whether linear or rotatory or both combined, in a millisecond, that can reach up to a 1,000 times the gravitational acceleration on the surface of Earth, the cytoskeleton (64) is violently destroyed, the organelles get disorganized and the cells die by physical destruction.

In the case of sudden and great expansion of the cytoplasmic gases, as it occurs in the operational conditions of the process and equipment for sterilizing and removing oxygen from liquid foods at low temperature through decompression and/or great linear or rotatory accelarations, if the cytoplasm is also subjected, simultaneously, to great accelerations, there is no chance of life for the cells; they die and the liquids that are being treated get sterilized by physical phenomena, at low temperature, with whole preservation of its most valuable molecules.

### Interactions of the ultrasonic waves with the microorganism cells and with the liquids where they are immersed in

There are several interactions between the ultrasonic frequency waves and the microorganism cells, immersed in water, containing metabolic gases, at atmospheric pressure, or insufflated by pressure.

The ultrasonic frequencies apply high mechanic energies to the liquids they are applied to (repetitivo), as they are great intensity acoustic waves that go through the water at 25° Centigrade, at a speed of 1,500 meter per second.

These high frequency waves are produced by devices consisted of a generator of high frequency electric current and of one or more transducers that convert this electric energy into mechanic energy.

Mechanic compression waves, with frequencies above 25 kHz, are referred to as ultrasonic, because they are inaudible by man, whose hearing limits lie between 20 Hz and 25 kHz.

The high frequencies of the ultrasonic waves cause the very interesting physical effect of "Cavitation", described as follows.

Like all sound waves, the ultrasonic waves alternate between expansion and compression phases in the setting where they propagate themselves. The compression phases perform a positive pressure over the liquid, which causes the approaching between its molecules; the expansion phases perform a negative pressure that, in turn, tends to distance the molecules from each other.

If the energy associated with the wave, in the expansion phase, is high enough, the molecules get separated and form microscopic cavities inside the liquids, in which the gases dissolved in the liquid get expanded, forming bubbles with a diameter of about fractions of thousandth of millimeters, or micra.

Such bubbles can expand, increasing their volumes, until they reach such dimensions that the kinetic energies of the gases in their interior can no longer counterbalance the external pressure performed by the surrounding liquid and the implosion of such micro-bubbles results from it.

The primary effect of each one of such explosions is the formation of high intensity transmission waves that propagate themselves in the radial direction, from the center of the explosions, at speeds of about 110 meters per second; if there are microorganism cells present in the liquid, the propagation waves of the implosions of the gas micro-bubbles created by the cavitation reach them with a great mechanic force, destabilizing their cell membranes.

When the implosion of these micro-bubbles occurs in the cytoplasm and inside the organelles of the microorganisms, the consequences are even more lethal as direct consequences of the disturbances caused by the implosions and, yet, by the phenomenon shown as follows.

To the primary effect of the cavitation, another effect, of thermal kind, comes in addition immediately after it, which is particularly significant to the object of this Patent: - heat is generated during the implosion of the gas micro-bubbles that yield to the action of the pressure of the surrounding liquid in a very highly punctual way, manifested by temperatures, also punctual, that can reach up to 5,000° C.

Naturally, such temperatures are transmitted to the liquid, but as the amount of spread heat is so small, which is function of the potency of the applied ultrasonic waves, despite the punctual high temperatures, the heat is spread quickly to the rest of the liquid and the rise of the temperature, of which the total liquid is little although, punctually, perform lethal effects inside the cells and the cell organelles of the microorganisms they aim to eliminate.

For obtaining the maximum cavitation effect in water, the following factors must be taken into consideration:
1 - the production of the cavitation is amplified by the rise of the temperature of the liquid;
2 - under the effect of the ultrasounds there is a continuous release of the gases dissolved in the liquid and inside the cells and in the organelles of the microorganisms present in it; the gas micro-bubbles get together by coalescence, increase their volume and go up towards the surface of the liquid;
3 - in the aqueous solutions, the optimum point for the production of the cavitation effect is between 40 and 60°C;
4 - the intensity of the production of cavitation in water is a role of the frequency of the generated wave; the lower the frequency, the higher the intensity;
5 - the higher the frequency, the smaller the dimension of the micro-bubbles and also higher the speed of their diffusion to the liquid;
6 - ultrasounds - absorbed, reflected or refracted ones - disorganize the systems of the active and passive transportations of the cell membranes, with mortal unbalances of their homeostasis;
7 - when liquids with great amounts of gases insufflated at high pressures are bombarded by ultrasonic waves, the effects described above are very amplified: - gas micro-bubbles are released in the core of the liquid and inside the cytoplasm of the contaminative organisms in large amounts;
8 - experiments of the author of this Patent reveal that ultrasound waves, in different frequencies, applied to the liquids, previously gasified or not, at the temperature of 25°C, at intensities and periods of time experimentally determined, for each liquid, when conjugated with the great and sudden decompression, typical of the operational conditions of the process and equipment for sterilizing and removing oxygen from liquid foods at low temperature through decompression and/or great linear or rotatory accelarations, are lethal to microorganisms such as bacteria and fungi, and they produce the minimal heating of the liquids to be treated, which is the scope of the object of this Patent, that is, sterilizing, at as low temperatures as possible, the liquid foods are subjected to their processes in order to preserve all their most valuable nutrient molecules.

### Interactions between the electromagnetic irradiation of microwaves, at the frequency of 2.450 MHz, and the water and the cell membranes and the living microorganism organelles immersed in it

The action of the microwaves in the liquids and their application in the cooking of foods were found by chance during the World War II by an Englishman when he operated RADAR equipment.

Dielectric materials, like water, are permeable to the force lines of the electromagnetic field, although they do not conduct the electric current, like the metallic conductors. The interaction between the electromagnetic waves and the matter generates alternated movements of the molecular orientation of the polarized molecules, such as the water ones, which cause friction with each other, generating heat.

In the case of the process and equipment for sterilizing and removing oxygen from liquid foods at low temperature through decompression and/or great linear or rotatory accelarations, the frequency is that of 2,450 MHz used in the household microwaves, which is absorbed by the water and, with great damage, by the hydrated, lipidic-proteic compounds that form the contaminative microorganism membranes, leaving, however, the enzymes, vitamins, antioxidants and other compound molecules of liquid foods intact.

Researches done in order to determine the destruction, inactivation or decrease extent of the vitamins, immunoglobulins and other complex factors, present in certain foods, showed that the heat, at high temperatures, rather than the microwaves, is responsible for such losses.

One of these researches showed that the folic acid loss - Vitamin B 9 - during broccoli cooking is due to the temperature and cooking length and not due to the type of heat source, with the losses being identical, whether the broccoli is cooked, during the same time length and temperature, on conventional stoves or in microwave ovens.

In another research, microwave ovens were used for heating, at several temperatures, samples of human milk that were kept cool in a breast milk bank ward of a neonatal nursery hospital and, later, the several already cooled milk samples were inoculated with a culture of Escherichia coli , with the aim to determine, from the growth extent of the inoculating culture, the loss extent of the immunoglobulin A and of other delicate enzymes, like lysozyme, present in the mother's milk, due to the heating by microwave oven.

The outcomes showed that the losses of these factors were in consequence of high temperatures rather than of the microwaves, as the milk samples, just slightly heated, although bombarded by high potencies of the microwave oven, had no significant losses of their most valuable bactericidal properties.

The applications of ultrasonic waves and microwaves during the process of sudden decompression of the liquids to be treated can occur soon before or simultaneously with it; they can also be alternately applied, at any order and for any duration and intensity regimes.

### Effects of the irradiation by ultraviolet light and of the heterogeneous photocatalysis, provided by ceramics or resins containing certain nanostructured substances, on the microorganism cell membranes

The beginning of the use of copper or silver bowls to preserve the water to be consumed by human beings gets lost in time; although European museums shelter hundreds of pots and cups made of these materials, dated from Roman times and even more ancient people, not only the material aspects were preserved, but also the recipe used for purifying the water.

The monks in the procession centers, which the Catholic Church built during the Middle Age, usually located next to water springs considered miraculous, preserved the collected and blessed mineral water, under drinkable conditions, by keeping them in copper or silver pots, a combination of nobility of content, continent and function.

As time passed by, silver outnumbered copper in the use as a preserver of drinkable waters because its ions, unlike those of the copper, are innocuous to men.

In 1929, in Germany, Dr. G. Krauser made the Silver Chlorite react with the ceramic varnish in such a way that the colloidal, metallic silver became adherent to the ceramic varnish that covered the internal part of the pots and bowls, which was revealed to be not only able of preserving pure water, but also of purifying the water to be drunk.

The bactericidal effects of the metallic silver were very general as it is proved by the custom brought by the Europeans to Brazil in the colonization period: - the newborn babies were given small silver spoons with which they were fed. Once the children were grown, the small spoons were kept inside the jars in which the water for family food consumption was kept.

The use of silver in the colloidal form increases its bactericidal effects; currently, the reason for such effects is known by the Physics-Chemistry of the surfaces and the State of the Art advanced towards the use of silver in the form of structured nanoparticles in ceramic coatings or plastic polymers, applied on the glass or steel, generally associated with other compounds that contain the same or bigger bactericidal properties, like the Titanium Dioxide, Zirconium Dioxide, Tin Dioxide, among others.

In the presence of light at a suitable frequency, the materials above absorb the photons with energy that is the same or higher than that of each band gap, which results in the promotion of an electron from the valence band to the conduction band, which generates an electron-hole pair (e-/h+) in the valence band.

The holes (h+) have high positive electrical potentials, which reach up to 5.5 Volts in the case of ZrO2 and that originate the Hydroxyl radicals, from the water molecules adsorbed on the material surface, which degrade the organic matters.

Moreover, this such high positive potential difference, as it acts over the cell membrane, whose average electrical potential, between the external and internal parts of the cell membrane, is 0.070 Volts, destroys itself, causing the death of the contaminative microorganisms.

It is worth recording that a tension of 5.5 Volts is nearly 80 times greater than the physiological potential difference of 0.070 Volts; besides, with this low tension, as the distance between the charges is around 3.5 nanometers, the regular electrical field between the two plasmic membrane faces is 200,000 Volts/centimeter; therefore, when the potential difference is increased by 80 times, the electrical field rises to 16 million Volt/centimeter, which is much higher than the insulating capacity of the dielectric, breaking the stereochemical structure of the cell membrane and leading the microorganisms to death.

Matsunaga et al (1985), showed that the Titanium Dioxide coatings, irradiated with ultraviolet light, destroyed bacteria like Lactobacillus acidophilus and Escherichia coli, as well as yeasts such as Saccharomyces cerevisiae.

These researchers also showed that such photo destructive action is connected to the reduction of the intracellular levels of the coenzyme - A, by photo-oxidation and by the progressive increase of the cell membrane permeability, destroying its "barrier" effect, which implicates in the free flow of the intracellular content and in the death of the microorganism.

Researches carried out by the University of Campina Grande - Paraiba - about the treatment of water for human consumption, showed that the heterogeneous catalysis, either by sunlight or by ultraviolet light irradiated over the compounds containing nanostructured particles of Titanium Dioxide, take 100% of the microorganisms, such as Staphilococcus aureus, Escherichia coli, Salmonella typhimuriun and other thermotolerant coliforms to death.

As to the ultraviolet light bactericidal powers, it can be stated that they were recognized when, in the middle of the 19th Century, the first electric gas-discharge lamps were developed and a radiation that lay beyond the violet was identified during the prismatic decomposition of light.

The ultraviolet light became an interesting laboratory curiosity; the objects shone when lit by it and the dyed fabrics got worn just like when they were subjected to the hypochlorite ion, whose bactericidal power was already well-known; from this property, irradiating contaminated liquids with ultraviolet light was tried and their disinfection was accomplished, being determined, later, that the maximum bactericidal effect lies in the irradiation band between 245 and 285 nanometers.

According to the quantum mechanics, the energy "E" associated to a photon can be represented by "E = (E2 - El) = CF", where "E" is the energy of the irradiated photon, "E1" is the energy of the quantum level to which the electron returns after having irradiated the photon and "E2" is the quantum level to which the electron was promoted by the excitement, "C" is the Plank Constant and "F" is the frequency; in consequence, the high energetic content of the high frequency photons of the ultraviolet light and their ionizing effects on the matter.

In the case of ultraviolet or white irradiation, usually from Xenon or LED's lamps, over the coating containing Titanium Dioxide nanostructured particles, nanostructured silver and other compounds, these particles are strongly excited and have their bactericidal properties very much increased.

The ultraviolet irradiation also acts straight on the cells, with lethal results, as it has been described since the beginning of the studies about it.

The mentioned "coatings" act as catalysts, that is, they take part in the reactions by influencing with their directions and speeds, but they do not consume themselves, which means that, in industrial language, they are rather permanent, long-lasting and, therefore, of low costs.

The white light irradiation over the coating surface, in replacement of the ultraviolet light, is done to eliminate photochemical effects of the latter on the micronutrient molecules of the liquid foods to be treated.

Thus, all the microbicidal arsenal, auxiliary of all the core processes of the objects of this Patent aims to assure complete asepsis and the process and equipment for sterilizing and removing oxygen from liquid foods at low temperature through decompression and/or great linear or rotatory accelarations, uses inside the ducts, vessels and other devices that constitute them, ceramic and/or polymer coatings containing specific nanostructured compounds, with or without the ultraviolet or white light irradiation, for a higher bactericidal effectiveness.

### Lethal effects of great accelerations on the cytoskeleton

These effects were described preliminarily along with the basic description of the cell morphology; for understanding the effects of the huge accelerations imposed in milliseconds to the cells of the contaminative microorganisms, it is important to remember that the physical constitutions of such microorganisms, according to Figure 13 - whether they are bacteria, fungi or protozoan - do not have any defense against accelerations, as they have densities which are close to that of the water, environment where they live in suspension and, therefore, their supporting organs are only a little more resistant than the necessary to support their own weight, under water immersion conditions. Their structural constitutions, which come from hundreds of millions of years of evolution, shape them in a proteic gel that is extremely complex, defined and differentiated by microtubules and delicate functional membranes that, due to the delicacy of the materials from which they are built, do not have any defense against great accelerations.

In case such microorganisms are subjected to great accelerations - whether they are applied linearly, rotatorily or both combined - the architectures of their organelle and of their cytoskeleton, as well as the spatial and functional relations of their organelles, are destroyed, their physiologies collapse and they die.

One of the ways for obtaining such accelerations is by throwing the liquid food, conformed in droplets or fine sprays, at high speeds, at any angle, in the opposite direction of the rotation of the blower blade faces, which can be octagonal or oblique, in relation to the direction of the jets sprayed on them, or they can be lined up in any kind of curve, such as the blowers blades, shapes that make linear or rotatory accelerations simultaneously.

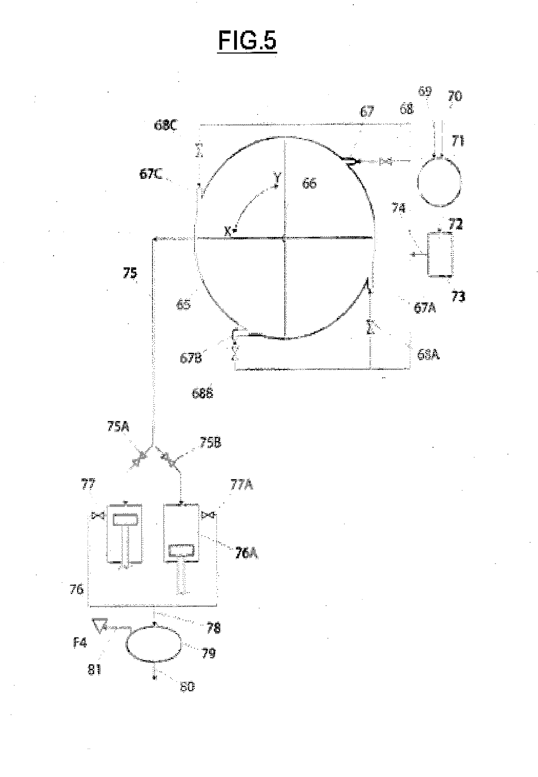

Here is what happens when such jet of the liquid reaches, in the contrary direction, the blades of the mentioned 4-blade blower of the process and equipment for sterilizing and removing oxygen from liquid foods at low temperature through decompression and/or great linear or rotatory accelarations, object of this Patent, similar to what is shown in Figure 5, considering that:
1 - the length of each blade from the blower axle is 0.5 meters and its rotation is 3,600 RPM (revolutions per minute) or 60 revolutions per second;
2 - the tangential speed of the extremities of the blower blades will be, therefore, 2 X 3.14 X 0.5 meter X 60 revolutions per second = 188 meters per second;
3 - the liquid to be processed is thrown in the opposite direction of the tangential speed of the blower blades, at the speed of 20 meters per second or more, in the form of droplets or fine liquid sprays conformed by 4 injection nozzles, with an area of about one square millimeter, with 1 nozzle for each blower blade;
4 - this speed of 20 meters per second of the spray of the liquid to be treated is acquired by its compression in a gaseous environment, by neutral gas, like Nitrogen, or when such liquid is subjected to compression injection cylinders, or rotary pumps, whose exit pressures are nearly 100 kilograms per square centimeter, which intensely gasifies the treated-to-be liquid as well as the cytoplasmic interior and organelles of the present contaminative microorganisms;
5 - under these conditions, when the spray of the liquid to be treated hits the blower blades, whose extremities are at 188 meters per second, the spray suffers an acceleration that makes it pass from the speed of 20 meters per second, in one direction, to the speed of 188 meters per second in the opposite direction, that is, it receives an acceleration of 208 meters per second squared, an acceleration that happens in fractions of a second, that is, in this case, an acceleration that is nearly 750 times the Gravity on the Earth's surface, which is absolutely unbearable for the delicate protein threading that configures the cell architecture, like its protein cytoskeleton, its cell membranes and its organelle membranes, constituted in lipidic-proteic gel, dependent upon their reciprocal spatial relations to be able to perform the biochemical functions, whose ordered set is called life.

All the complex and dynamic protein constructions that constitute the living cells - and their organelles - are mechanically destroyed in these shocks by the sudden acceleration, which is incompatible with the structural resistance of their compounds, resulting in death of all the cells, without exception.

However, at the same time as the microorganisms are being subjected to such high accelerations- to which no living being survives - they are thrown, ingurgitated from the gases that were introduced in them at high pressures, into an environment in which the pressure is much lower than the gas pressure, imposed to the liquids to be treated before entering the process, because the blower rotation expels the gases from their interior, where the pressure goes down to around one hundredth of the atmospheric pressure, adding up the effects of the acceleration and the ones of the sudden decompression, both lethal to the cells.

The result is that, without exceptions, all the microorganism cells are destroyed by mechanical efforts simultaneously with the explosion of the internal gases, resulting in the death of all the contaminative microorganisms, therefore, carrying out the perfect sterilization of the liquid foods, at low temperatures, without the deleterious effects of the heat on their compounds.

The great accelerations, mostly rotatory, applied to the microorganisms can be compared with the effects that the tennis players apply to the tennis balls as they hit them with the rackets in such a position that they apply tangential accelerations onto the surfaces of the balls; when such accelerations are great, due to the their inertia in relation to the reaction to the applied forces, the filaments of the tissues that cover them get to be taken away and the resistant vulcanized rubber, which they are made of, suffers from serious material fatigue.

The same happens, even more seriously, with the cytoskeleton of the microorganism cells as they receive great tangential accelerations.

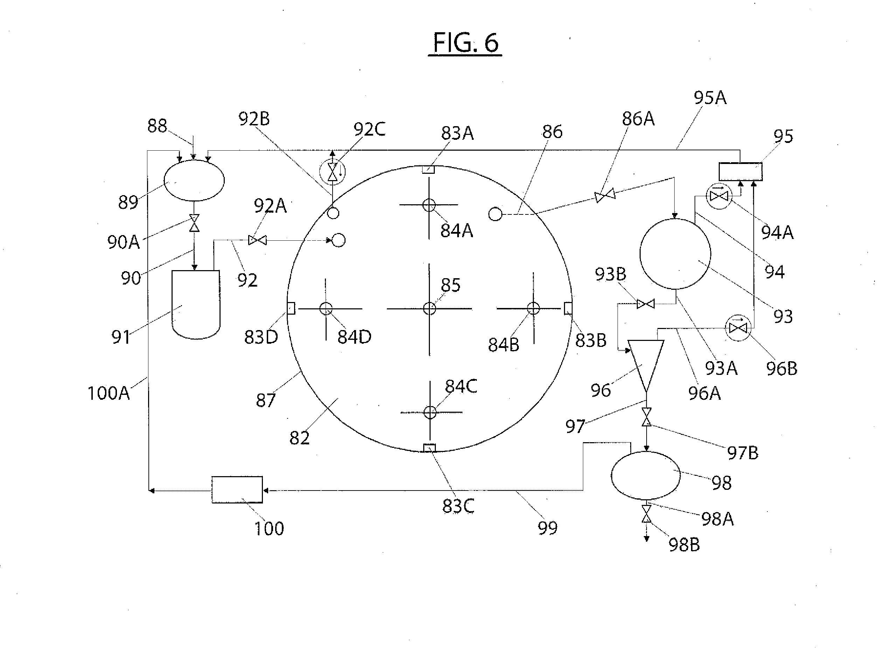

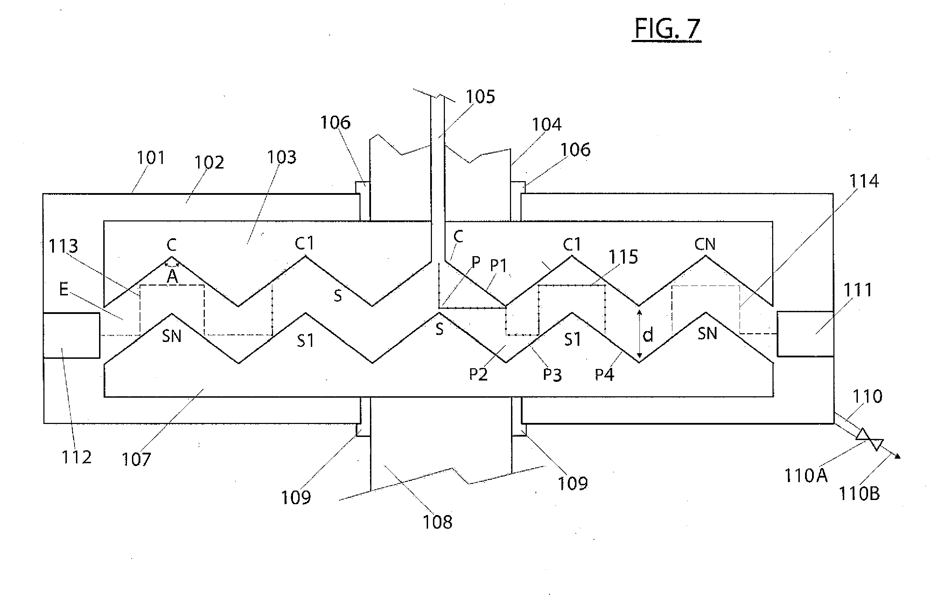

The building variants illustrated in Figures 6 and 7 constitute devices that are able to apply, repeatedly, great tangential accelerations, or rotatory ones, to the microorganisms.

As stated before, sterilization is a dichotomic concept: - either it is total or it is not sterilization, for if one single viable microorganism is left, the population will recover itself.

In the pasteurization process at relatively low temperatures, up to 99.9% of the contaminative organisms are eliminated and, therefore, the liquid foods treated by it have short shelf life and they need to be kept cool; in the case of pasteurization by the UHT - Ultra-High Temperature - process, 100% of the contaminative organisms are eliminated with serious losses of nutrients, colors and tastes of the products to be treated, which can no longer be used for the industrialization of any dairy product, although they have a long shelf life and do not need to be kept cool.

With the process and equipment for sterilizing and removing oxygen from liquid foods at low temperature through decompression and/or great linear or rotatory accelarations applied to the milk, besides keeping all its natural characteristics, it has a long shelf life and refrigeration is not needed, bringing great economic gains and the fall of product prices.

With the process and equipment for sterilizing and removing oxygen from liquid foods at low temperature through decompression and/or great linear or rotatory accelarations applied to beer, it can be sterilized at low temperature, much smaller than that of the sterilization, with a temperature that is just enough for inactivating the undesirable enzymes and, thus, being able to be packed raw, with the name and value aggregated to draft beer, with all its advantageous organoleptic properties preserved, without cooling, for a long shelf life span.

The same happens with the fruit juices and coconut water; for inactivating the enzymes, just a slight rise of the temperature, much lower than that of the pasteurization, is needed before or after the performance of the process and equipment for sterilizing and removing oxygen from liquid foods at low temperature through decompression and/or great linear or rotatory accelarations, by any way, in order to obtain products that preserve all their advantageous organoleptic and nutritious properties and for obtaining long shelf life, discarding refrigeration.

The process and equipment for sterilizing and removing oxygen from liquid foods at low temperature through decompression and/or great linear or rotatory accelarations is applied to sterilize and to remove the Oxygen, at temperatures close to the freezing point, from the extracts of any parts of vegetables, including germinating seeds, for obtaining superfoods by keeping all the natural active principles of the plants, being that the superfoods, as they are kept under refrigeration, have a shelf life that is suitable for the commercialization of natural foods.

The process and equipment for sterilizing and removing oxygen from liquid foods at low temperature through decompression and/or great linear or rotatory accelarations can be used for sterilizing, at cold, grape juices before fermentation for producing any kind of wine, with a later inoculation of the specific, pure fermentative strains for obtaining total control over the fermentation results.

### Illustrations and work of the process and equipment for sterilizing and removing oxygen from liquid foods at low temperature through decompression and/or great linear or rotatory accelarations, object of this Patent

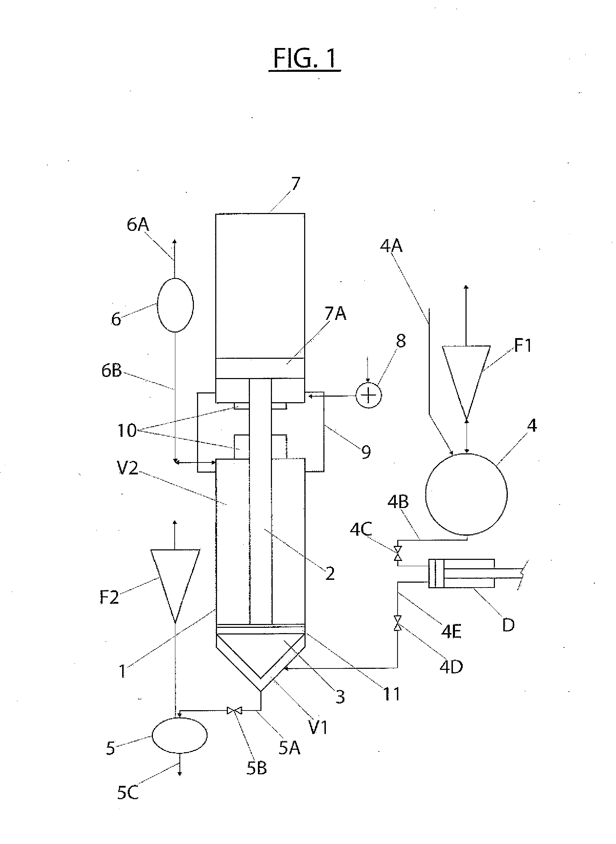

Figure 1 illustrates the first of the two core principles which the innovations, object of this Patent, are based upon, and it constitutes the preferable way of application of the Process and pieces of Equipment, object of this Patent, to liquids at atmospheric pressure.

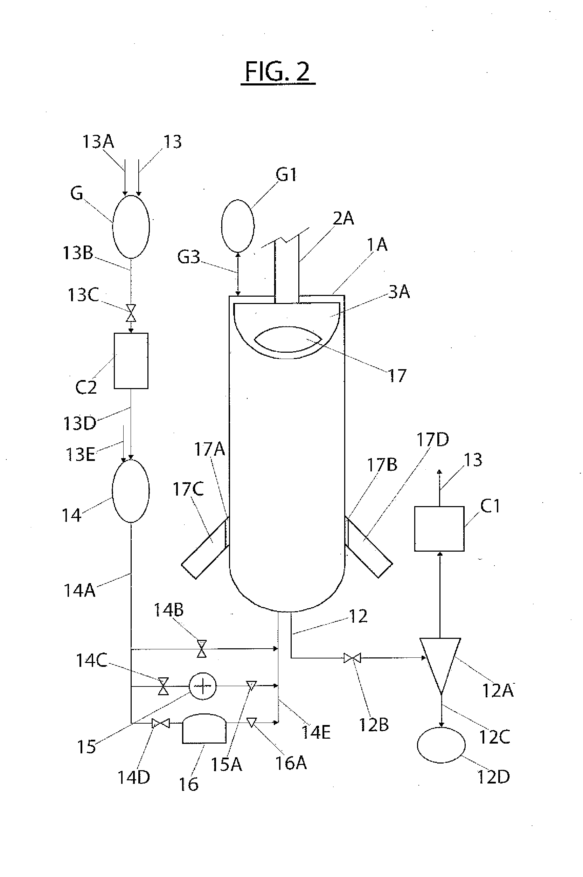

Figure 2 and the descriptions related to it describe the first building variant of the object of this Patent and they aggregate to the preferable building way, the first, the second, the third and the fourth ways of increasing the power of destruction of the microorganism cells, by means of the sudden decompression process, ways that can be associated and are consisted of:
   a - previously gasifying the liquids to be treated at any pressure, in a slow or fast way,
   b - applying ultrasonic waves at varied frequencies to the liquids to be treated, before or during decompressions,
   c - irradiating the liquids to be treated with electromagnetic microwaves before or during decompression,
   d - keeping the liquids to be treated in contact with surfaces that received ceramic coating, or plastic polymer one, containing specific nanostructured compounds, irradiated or not with ultraviolet, white light or of any other color.

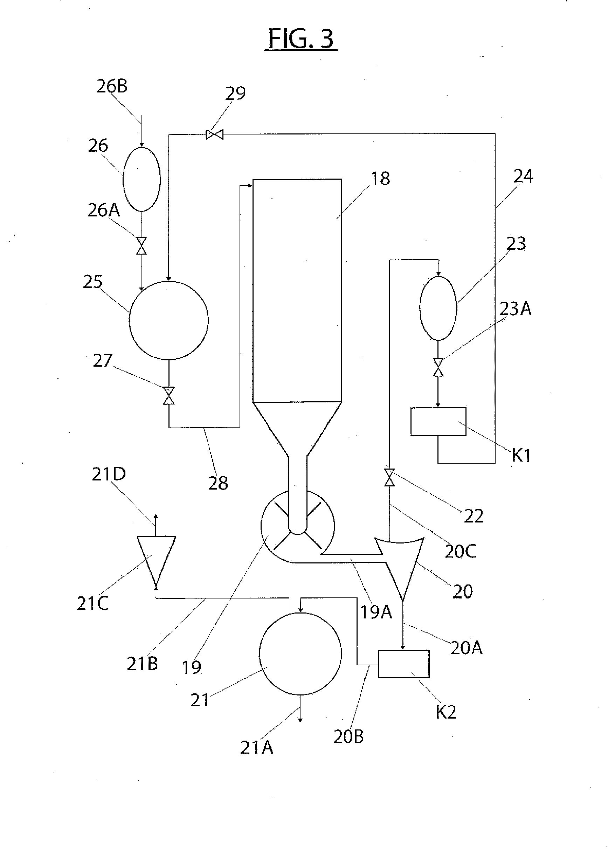

Figure 3 describes the second building variant that works in a continuous great decompression process, differing from the operational ways of the preferable and first building variant of performance in which the great and sudden decompression process is applied in cycles.

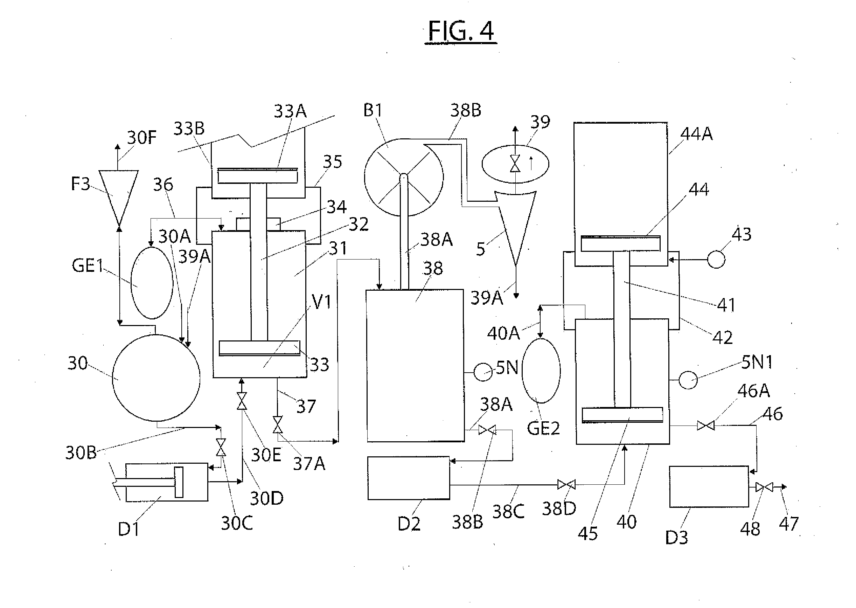

Figure 4 describes the third building variant of the object of this Patent, which is consisted of a piece of equipment that can remove up to 99% of the Oxygen and other gases dissolved in the liquids to be treated and in the interior of the contaminative microorganism cells of these liquids; the removal of the Oxygen prevents the later oxidation of the molecules of the active principles of the liquid to be treated.
Figure 5 is referred to the fourth building variant of the object of this Patent, whose innovative core principle is consisted of applying great accelerations of up to 1,000 times, or more, the Gravity of the Earth's surface, to the liquids to be treated, conformed in droplets or thin sprays, in fractions of a second, in resulting linear, rotatory or both combined vectorials right before, after or simultaneously as they are subjected to the great decompressions.
Figure 6 illustrates an alternative way of obtaining straight or rotatory accelerations, whose principle is described by Figure 5 and it is consisted of creating accelerations of great batches of liquids to be treated, in closed spaces, for creating great turbulences in it.

The liquid foods sterilized by the process and equipment for sterilizing and removing oxygen from liquid foods at low temperature through decompression and/or great linear or rotatory accelarations, except the superfoods, do not need to be kept under refrigeration, which makes this process very economic in terms of logistics.

Moreover, by the fact that it explodes the cells, by blowing their cell membranes, their organelle membranes and the cell walls of the vegetable cells, the liquid foods of vegetable kind, subjected to such process, become more homogenized than it can be acquired by simple compression, milling, grinding and other processes to destroy the vegetable tissues for extracting their juices. For controlling the temperature during the process, in all its building ways, the decompression vessels as well as in the storage tanks of the products to be treated or already treated, can have envelopes for the circulation of the cooled, or heated, water or by any other form of heating, for counterbalancing the temperature decreased by the expansion of gases and/or inactivating the extracellular enzymes of any kind, according to the table of specific temperature for each kind of enzyme.

All the pieces of equipment of all the building variants of the object of this Patent, in their industrial performances, are controlled by specific software that acts in the processes through the equipment automation.

All the conduits, vessels and valves of all the building variants of the equipment, object of this Patent, can have their internal surfaces covered by plastic or ceramic, metal or semiconductor nanostructured oxides coating and be irradiated or not with ultraviolet, white light or of any other color.

For simplifying the Report of this Patent, the forms of temperature and process controls, by a specific software, will not be illustrated or mentioned other times besides this one reported herein, unless it is mandatory for the understanding of specific details.

The bactericidal coating of the equipment internal parts, containing nanostructured substances, lit or not by ultraviolet or white light, will be mentioned only in the description of the first building variant, although it may be present in all types of performance the object of this Patent.

### Description of the work and illustrations of the preferable form and of the building variants of the object of this Patent

Figure 1 is a frontal schematically view that illustrates the first of the two basic, core principles of the work of the object of this Patent and it is the preferable way for its performance, which is able to industrially process large volumes of liquids per minute; in it, we can see the decompression tank (1), usually made of stainless steel and, inside it, the piston (3), the rod (2), the treated-to-be liquid tank (4), which receives its content through the duct (4 A) and whose content, through the feeding duct of the liquid for treatment (4B), under the control of the valve control (4C), is taken through the piston-dosing cylinder (D) that doses and comprises the liquid to be treated, sending it into the decompression tank (1) through the duct (4E) under the control of the valve(4D); we can also see the exit duct of the treated liquid (5A), with its valve (5B), which takes it to the storage tank of treated liquid (5), where its pressure is equalized to the atmospheric pressure by means of the air sterilizing filter (F2) which communicates with the atmosphere, the interior of the tank of treated liquid (5) and from which the treated liquid leaves for bottling, through the duct (5C); we can also see, in Figure 1, the air sterilizing filter (F1), that balances the internal pressure of the tank of the liquids to be treated (4) with the atmosphere, the oil pump (8), the hydraulic decompression cylinder (7), its piston (7A), together with the rod (2) by any means, the sterile gas tank (6), usually Nitrogen, which, through the relief duct (6B), receives the sterile gas, of food kind, pressed in the upper part of the interior of the decompression tank (1), by the rise of the piston (3); as this sterile gas only has contact with the walls of the decompression tank (1) and with its internal elements, it is kept sterilized and it circulates, through the circulating sterile gas duct (6B), between the sterile gas tank (6) and the upper part of the decompression tank (1) without contact with the atmospheric gases and, therefore, does not get contaminated by the environmental microorganisms. The sterile gas tank (6) can be fed with the gases through the duct (6A).

We can also see, in Figure 1, the volume V1, which corresponds to the volume of the liquid to be treated at each decompression cycle and the Volume V2, which corresponds to nearly 100 and 200 times the Volume V1 and that corresponds to the decompression volume of the equipment; we can also see the high sealing gaskets (10), the sealing ring (11) of the piston (3) and the aseptic sealing (9), which stops the rod (2) from being in contact with the atmospheric air and prevents the contamination of the equipment.

The work of the device illustrated by Figure 1 is the following: the liquid to be sterilized is taken to the tank of the products to be treated (4), at room temperature or with its temperature previously risen, by any means, to reach specific temperatures for inactivating the undesirable enzymes, or with the temperature lowered until close to its freezing point for their preservation, through the feeding duct of the liquid for treatment (4A); the balance between the internal pressure of the tank of the products to be treated (4) and the atmospheric pressure is done by the air sterilizing filter (F1), in a way that the liquids to be treated, lying there, will always be insulated aseptically from the contact with the environmental air and at a pressure that is the same as the atmospheric one and, due to such pressure, they leave through the duct (4B), under the control of the valve (4C) and enter the piston-dosing cylinder (D), which doses the amount of liquid to be introduced inside the decompression tank (1) in each operational cycle and, as the filling operation of the dosing cylinder (D) ends, the valve (4C) is shut, the valve (4D) gets open and the liquid to be treated is injected inside the decompression tank (1), the piston (3) may be at any height between its lowest point and its highest point, so that the liquid to be treated can be injected into the decompression tank (1) with it in a nearly vacuum state, in case the piston (3) is in its highest point; with the piston (3) at any position between its highest and lowest points, or being, preferably, injected with the piston (3) being close to its lowest point, filling the volume (V1).

Each complete operational cycle of the equipment described in this Figure 1 has the two hemicycles described as follows:
- Decompression hemicycle: - When the liquid to be treated, properly dosed, enters the decompression tank (1), the valves (4C), (4D) and (5B) are closed and, by the activity of the oil pump (8) and of the hydraulic decompression cylinder (7), the piston (3) is risen at great speed - in tenths of a second - up to its highest point in order to produce a sudden and great increase of the volume over the liquid to be treated, decreasing its pressure between 100 and 200 times its initial pressure, which causes the vaporization of the liquid to be treated and of the intracellular liquids of the contaminative organisms as well as the expansion of the gases lying there, causing the explosion of the cells and organelles of the contaminative microorganisms present in the liquid, thus sterilizing it at cold.

The neutral gas contained in the upper part of the decompression tank (1) and of the piston (3) is taken to the sterile gas tank (6), through the duct (6B) relieving the operational pressures of the system.
- Re-compression hemicycle: Once the piston (3) has reached its highest point and produced as much decompression of the equipment as possible, again, by the activation of the oil pump (8) and of the hydraulic decompression cylinder (7), this time in an otherwise activating cycle, the piston (3) goes down to its lowest point, at the same speed as it was risen, and strongly compresses the gases that were removed from the liquids to be treated during the decompression hemicycle, liquefying such liquids and re-gasifying the liquids to be treated to the same original pressure before the treatment, that is, the atmospheric pressure; when the piston (3) reaches the height that produces the volume (V1), the valve (5B) gets open, releasing the treated liquid through the duct (5A), towards the treated liquid tank (5), which also has its internal pressure balanced with the atmospheric pressure by means of the air sterilizing filter (F2), being that the piston (3) keeps going down to its lowest point and completely empties the interior of the decompression tank (1), leaving it ready for the beginning of a new cycle.

The gas expansion is also able to burst the vegetable cell walls, cellulose-like, releasing their cytoplasmic contents to the involving liquid, thus producing homogenization.

The bigger the relation between V2 and V1, the smaller the foam formation during the decompression, as there will not be enough gas for forming bubbles and these get undone during the decompression moment because of the quick expansion that applies a too fast growth for them to keep the liquid enveloping pellicle.

It can be seen, thus, that as it rises, the piston (3) produces the sterilization; as it goes down, it compresses the gases over the liquids again, gasifying them at cold, at atmospheric pressure, under which they are bottled; this is a practical application of a huge value to the brewing industry that can sterilize its products at cold and distribute cold sterilized draft beer, with long shelf life, without refrigeration, and keeping the natural tastes and odors that would get lost by the effects of the pasteurization high temperatures. In this preferable building of the process and equipment for sterilizing and removing oxygen from liquid foods at low temperature through decompression and/or great linear or rotatory accelarations, the hydraulic decompression cylinder (7) and the oil pump (8), used for moving the piston (3), can be replaced by a worm thread rising mechanism, pneumatic cylinders or any other suitable way.

Figure 2 describes the first building variant of the object of this Patent, whose advantages are the inclusion of devices purposed to:
a - previously gasifying the liquids to be treated at any pressure, in a slow or fast way,
b - applying ultrasonic waves at varied frequencies to the liquids to be treated, before or during decompression,
c - irradiating the liquids to be treated with electromagnetic microwaves before or during decompression,
d - keeping the liquids to be treated in contact with surfaces that received ceramic coating, or plastic polymer one, containing specific nanostructured compounds being irradiated with ultraviolet, white light from Xenon lamps or of any other color or source, such as LED's.

Figure 2 is a schematically frontal view of the first building variant of the process and equipment for sterilizing and removing oxygen from liquid foods at low temperature through decompression and/or great linear or rotatory accelarations, that is described along with its work explanation, as follows: - in it, we can see the decompression tank (1A), the rod (2A), the piston (3A), represented in its highest position, the sterile gas storage tank (G), usually Nitrogen, which receives the sterile gas recovered from the process through the duct (13) and supply of new charges of sterile gas through the duct (13A); the sterile gas contained in the sterile gas storage tank (G), through the duct (13B), under the control of the valve (13C) goes to the medium pressure compressor (C2) - that compresses it at pressures of, at least, 10 kilograms per square centimeter - being that the compressed gas, by means of the duct (13D), enters the treated-to-be liquid storage tank (14), which receives the liquid to be treated through the duct (13E), at the temperature that was defined for the process and, inside such tank, the liquid is gasified by the gas compressed over its surface, from where it leaves through the duct (14A) and, under the control of the dosing valve (14B) and duct (14E), it reaches the interior of the decompression tank (1A), in case of subjecting the liquids to be treated, inside the decompression tank (1A) to previous gasification of up to 10 kilograms per square centimeter. In case of preferring to gasify the liquids to be treated at higher pressures with the valve (14B) closed and the valve (14C) open, the gasification is done at higher pressures of up to 50 kilograms per square centimeter by the high pressure rotary (15), whose exit is controlled by the dosing valve (15A); being that the liquids to be treated go to the decompression tank (1A) through the duct (14E); in case of preferring to gasify the liquids to be treated at pressures that reach 200 kilograms per square centimeter, the liquid to be treated gets to the high pressure compressor (16), cylinder-and-piston-like, through the opening of the valve (14D), and through the dosing valve (16A) it goes to the duct (14E) and, from this one it goes to the decompression tank (1A), with such openings or closings of the cited valves and the movement of the piston (3A) and of the other functional devices that comprise this building variant being controlled and activated by a specific software.

Still in Figure 2, we can see a set of white and/or ultraviolet light sources (17C) that generate light by any means, such as discharge in Xenon tube, Mercury Vapor or LED's and the transparent window (17A) that is transparent to these irradiations, made of polymers, glass or fused quartz, resistant to the variations of pressure over its faces; we can also see the microwave source (17D) that shelters a magnetron tuned in 2,450 MHz and the window transparent to microwaves (17B), also made of polymers, glass or fused quartz, resistant to the variations of pressure over its faces; the set of white and/or ultraviolet light sources (17C) and the microwave source (17D) are coupled to the decompression tank (1A) obliquely, facing the upper part of such tank at angles that may vary between 30° and 60°, but preferably at 45°, so that the electromagnetic radiation sent by such sources move along the polished interior of the mirror of the decompression tank (1A), reflecting on its walls several times to excite the ceramic or polymer pellicles of its surface as much as possible, being that such pellicles contain the heterogeneous nonostructured, photocatalytic compounds. We can also see in this Figure 2, the set of ultrasonic transducers (17), assembled in a suitable position on the surface of the piston (3A) so that the ultrasonic waves generated get reflected all over the surface of the decompression tank (1A) and have as much interaction as possible with the treated liquids and their vapors; Figure 2 also shows the relief circuit of the sterile gases between the top of the decompression tank (1A) and the sterile gas tank (G1), through the duct (G3), with the same operation as the one described in Figure.

Still according to Figure 2, the liquids to be treated, gasified under pressures that range between 10 and 200 kilograms per square centimeter, enter the decompression tank (1A), through the duct (14E), with the piston (3A) being in its lowest position and it, in a fraction of a second, is risen by the action of any suitable mechanism, not represented in this Figure 2, up to its highest position, creating a sudden expansion over the surface of the liquids to nearly 100 times its volume, decreasing, immediately, the pressure over such liquids of about a hundredth of the atmosphere, making the liquid vaporize and the dissolved gases be released explosively as micro-bubbles, blowing the cells and organelles of the contaminative microorganisms and breaking vegetable cell walls, at cold. Immediately, the piston (3A) begins its descending cycle, compressing the liquids to be treated, which get liquefied and gasified again, under the pressure determined by the specific software, of 1 atmosphere, and when this pressure is reached, the valve (12B), which controls the flow in the treated liquid exit duct (12), through the decompression tank (1A), is open automatically and the treated liquid goes to the gas-liquid separator (12A) and from it, through the duct (12C) to the treated liquid storage tank ( )where they are kept at atmospheric pressure, to be packed, the gases separated from the treated liquids by the gas-liquid separator (12A), are compressed by the compressor (C1) and return, through the duct (13) to the sterile gas storage tank (G).

As the treated-to be liquids are gasified inside the treated-to-be liquid tank (14), at the pressure of up to 10 kilograms per square centimeter, due to the gas compression over such liquids, performed by the medium pressure compressor (C2) and there they lie for time periods experimentally determined and recorded in the specific software, as they leave this tank through the duct (14) there are only liquids with dissolved gases and there are no gases in gaseous state in the exit flow, so that the amount of gases dissolved in these liquids is very small, complying with the solubility laws of several gases in several liquids, at several temperatures; thus, when the sudden decompression takes place, inside the decompression tank (1A), by the great speed of the rise of the piston (3A), the pressure inside the mentioned tank gets to almost zero, causing an immediate decrease of the pressure over the liquids and gases in treatment that reaches up to 20,000 times the initial pressure to which they were subjected before the treatment.

Figure 3 illustrates the composition and work of the second building variant of the process and equipment for sterilizing and removing oxygen from liquid foods at low temperature through decompression and/or great linear or rotatory accelarations.

Unlike the preferable building way and first building variant, it operates continuously and not in cycles.

In Figure 3, we can see the continuous decompression tank (18), whose lower part communicates with the central entry of the high rotation exhauster (19), whose exit duct of gases and liquids (19A) is connected with the entry of the separator cyclone of gases and liquids (20); whose exit is done through the exit duct of condensed liquids (20A) that injects these condensed liquids into the compressor (K2) that compresses them at atmospheric pressure, or at pressures that are slightly higher than it, and, by means of the exit duct (20B) of the compressor (K2), injects them into the treated liquid tank (21), from which, through the exit duct of treated liquids (21A), these liquids are taken to the packing process at atmospheric or slightly higher pressure than it; we can also see the exit duct of gases (20C), of the separator cyclone of gases and liquids (20), that, through the pressure controlling valve (22), takes the gases to the process pressure equalization tank (23) from where, under the control of the pressure controlling valve (23A), they enter the fluid compressor (K1) and through the gas recirculation duct (24) and the pressure controlling valve (29), are thrown, under controlled pressure, inside the tank of the products to be treated (25); this gas re-circulation circuit serves for bringing economy to them and for keeping the gasification pressure constant over the products to be treated, inside the tank of the products to be treated (25), which, by means of the pressure controlling valve (26A), receives the sterile gas from the sterile gas storage tank (26), which is fed with sterile gases by the duct (26B); the tank of the products to be treated (25), through the flow controlling valve (27) feeds the continuous decompression tank (18), through the feeding duct (28). According to Figure 3, we can see the pressure established for the operational tank of the treated liquids (21), that is slightly higher than the local atmospheric pressure, is kept inside it by the same duct (21B) and by the sterilizing filter (21C), which communicates with the atmosphere through the duct (21D); thus, when the tank of treated liquids (21) is filled with liquid and its level goes up, the sterilizing filter (21C) lets these gases pass to the atmosphere; when the same tank is emptied, the sterilizing filter (21C) lets the atmospheric gases reach the interior of the mentioned tank that, thus, is kept at atmospheric pressure, which is the pressure at which it will be packed as a product. The sterilizing filter (21C) is a usual device in the food industry and it usually combines particle retainer cartridges, made of polyester or of other materials, electrostatic chambers, of ultraviolet light irradiation etc., that sterilize the air used to occupy the empty volumes of the liquid food storage tanks, in any phase of the processes.

The work of this equipment is continuous and it can be better understood if described from its starting point: - with the flow controlling valve (27) closed, the high rotation exhauster (19) starts the depressurization of the continuous decompression tank (18), and decreases it until it reaches pressures of about a hundredth of the atmospheric pressure, which it is able to do because it is an exhauster that operates at high rotation speeds and has large blades; the gases present inside the continuous decompression tank (18), sucked by the high rotation exhauster (19) are thrown in the entry of the separator cyclone of gases and liquids (20) and, e, through the gas exit duct (20C), under the control of the pressure controlling valve (22), they go to the process pressure equalization tank (23) from where, under the control of the pressure controlling valve (23A), they enter the gas compressor (K1) and through the gas recirculation duct (24) and the pressure controlling valve (29), they are thrown, under controlled pressure, into the tank of the products to be treated (25) so that the operational pressures of the set of bowls get established. When the pressure of about one hundredth of the atmospheric pressure is reached inside the continuous decompression tank (18), the flow controlling valve (27) gets open and starts its feeding through the feeding duct (28). The liquids to be treated that enter the continuous decompression tank (18), through the feeding duct (28), in a flow that is controlled by the flow controlling valve (27), derived from inside the tank of the products to be treated (25) at pressures of about 10 kilograms per square centimeter, suffer an immediate decompression of about 1,000 times, when the sterilizing phenomena already described in this Report take place; when the continuous decompression tank (18) starts receiving the liquid to be treated, in its upper part, it vaporizes and is sucked by the high rotation exhauster (19) and thrown in the entry of the separator cyclone of gases and liquids (20) and, through the exit duct of condensed liquids (20A), it is injected in the entry of the compressor (K2), due to the exit pressure of the high rotation exhauster (19) that compresses them at atmospheric pressure or at slightly higher pressures and, through the exit duct (20B) of the compressor (K2), it is injected into the tank of treated liquids (21), from which, through the treated liquid duct (21 A), these liquids are taken to the packaging process at atmospheric pressure or slightly higher than it.

It can be seen that this building variant of the process and equipment for sterilizing and removing oxygen from liquid foods at low temperature through decompression and/or great linear or rotatory accelarations is consisted of three circuits of fluid circulation, which, by the action of the high rotation exhauster (19), of the fluid compressor (K1), of the compressor (K2) and of the action of the pressure controlling valves and the flow controlling valves, keep the operational pressure of 10 kilograms per square centimeter inside the tank of the products to be treated (25), to the previous gasification of the liquid to be treated; it also keeps, at low pressure, of about 0.01 atmosphere inside the continuous decompression tank (18) and the pressure of 1 atmosphere, or slightly higher than it, in the treated liquid tank (21) and, when working, the set of devices keep, dynamically, the differences of operational pressures.

The high rotation exhauster (19) can be replaced by one, or more than one, cylinder and piston.

Figure 4 shows a third building variant purposed to:
1 - removing, at cold, in one single operation, between 90% and 95% and, in two operations, up to 99% of the Oxygen and any other gas that is dissolved in the liquids to be treated, as well as inside the whole vegetable cells, suspended in this liquid and inside the cells of the contaminative microorganisms,
2 - stopping the Oxygen and any extracted gas from returning to the treated liquid and,
3 - sterilizing such liquids at low temperatures without losing nutrients.

Figure 4 is a schematically frontal view of the devices that form this third building variant, whose work is described; in it, we can see the tank of the products to be treated (30), which receives them through the duct (30A) and also receives the liquids recovered elsewhere through the duct (39A), as it will be properly shown, being that the tank of the products to be treated (30) has its internal pressure kept at the local atmospheric pressure by the air sterilizing filter (F3), which communicates with the atmosphere through the duct (30F); the liquids contained inside the tank of the products to be treated (30) are at a temperature that is as much low as possible and leave it through its lower part through the duct (30B) and, through its admission valve (30C) that, like all valves of this building valves, is operated under the control of the specific software, enter the piston-dosing cylinder(D1), which aspirates the liquids to be treated until the proper measurement; with the admission valve (30C) being closed and the exit valve (30E) being open, it goes, through the duct (30D), under the operational pressure of the piston-dosing cylinder (D1), into the decompression tank (31), whose piston (33), together with the rod (32), at the moment the liquid to be treated enters, is close to its lowest point, leaving just the space (V1) to be filled by the liquid that enters the decompression tank (31); the rod (32) of the piston (33) is together with, by any means, the piston (33A), of the hydraulic cylinder (33B) - whose activating pump in not shown- with the decompression tank (31) and the hydraulic cylinder (33B) being coupled by the rod (32) and the space existing between the decompression tank (31) and the hydraulic cylinder (33B) insulated from the room air by the aseptic cover (35), filled with sterile gas, being that the high sealing gasket (34) applied around the rod (32) and the insulation of the environment acquired by the aseptic cover (35) assure that the interior of the decompression tank (31) not be contaminated by the atmospheric air; the upper part of the decompression tank (31) is filled with Nitrogen - or any other sterile gas - and, when the piston (33) is risen, decreasing the volume over the part located above it, in the decompression tank (31), the sterile gas contained in it circulates through the gas circulation duct (36), towards the sterile gas tank (GE1) and, in the opposite way, when the piston (33) is moved to the lowest part of the decompression tank (31), thus, keeping the relief conditions at the operational systems insulated from the air, formed by the decompression tank (31), piston (33), rod (32), gas circulation duct (36), sterile gas tank (GE1) and aseptic cover (35).

In Figure 4, we can also see that, after filling the volume (V1), located in the lower part of the decompression tank (31), the liquid to be treated, at the same pressure as the local atmospheric pressure, with the exit valve (30E) being closed, suffers a great and sudden decompression, into a pressure that becomes around 1 hundredth of the atmospheric pressure, by the fast rise of the piston (33), which causes the death, by the explosion of the cells, of all the contaminative microorganisms of such liquid, leaving it sterile and in the form of low temperature vapor, in which the air Oxygen and Nitrogen are dissolved, as well as all the gases present in the liquid to be treated; right after going up, the piston (33) drops quickly, compressing the vaporized liquids inside the decompression tank (31), which get liquefied and they gasify again with the gases they had lost during the decompression phase and with the exit valve (30E) closed and the valve (37A) open, the liquids to be treated are forced by the piston (33) to enter, through the duct (37), the upper part of the tank of gas removal (38), whose upper part is connected, through the duct (38A), with the high rotation blower (B1), which keeps the interior of the tank of gas removal (38) at a pressure between 1 tenth and 1 twentieth of the atmospheric pressure, at the same time it keeps a pressure that is slightly higher than the local atmospheric pressure in its exit duct (38B) and injects these gases removed from the liquids from the interior of the tank of gas removal (38), along with a small part of vaporized liquids, into the separator of gases and liquids (S), whose upper exit is in contact with the atmosphere, through the non-return valve (39), adjusted for just opening to the atmosphere when the internal pressure of the separator of gases and liquids (S) passes, at a certain degree, the local atmospheric pressure and, from whose lower part, the liquids separated from the aspirated gases - now without gases - go through the liquid recuperation duct (39A), again to the tank of liquids to be treated (30), since they have, dissolved in them, several aromatic molecules interesting to be kept in the final sterilized product; the liquids that are degassed inside the tank of gas removal (38), at pressures between 1 tenth and 1 twentieth of the atmospheric pressure, lose between 90% and 95% of the gases dissolved in them, which were replaced by the compression of the piston (33), during its descending cycle, then being removed almost all the air Oxygen and also the other gases they had before being treated and they were at atmospheric pressure, inside the tank of the products to be treated (30); the gas removal process from the liquids to be treated can be repeated with the already treated and degassed liquids and of losing up to 99% of the Oxygen and of other gases contained in them. The absence of Oxygen in foods such as the superfoods and fruit juices prevents their oxidation and their organoleptic or nutritional losses.

Still in Figure 4, we can see that, when inside the gas removal tank (38), the treated and degassed liquids get accumulated up to the height of the level sensor (SN), the specific software of the process and equipment for sterilizing and removing oxygen from liquid foods at low temperature through decompression and/or great linear or rotatory accelarations acts over the piston-dosing cylinder (D2), which doses and aspirates such liquids through the duct (38A), under the control of the valve (38B), that gets open for such operation and of the piston-dosing cylinder (D2), which compresses them and injects them, under pressure, on the bottom of the storage tank of degassed products (40), through the opening of the valve (38D), assembled on the duct (38C);

The storage tank of the degassed products (40) is a special kind of tank, whose volume is variable due to the position of the piston (45), which allows it to receive the liquids that will be present there until the moment they are packed, without the need of counterbalancing the pressure with gases, thus, every time the piston-dosing cylinder (D2) acts by injecting sterilized and degassed liquids into the storage tank of degassed products (40), the specific controlling software that commands the system also acts on the oil pump (43) that makes the piston (44) of the hydraulic cylinder (44A) rise just enough for increasing the internal volume of the storage tank of the degassed products (40) for receiving the liquid injected by the piston dispenser (D2); the piston (45), inside the storage tank of the degassed products (40) and the piston (44) of the hydraulic cylinder (44A) have the same rod (41) being, therefore, together; when a volume of the sterilized and degassed liquids inside the storage tank of the degassed products is (40) reached, the software receives the information from the level sensor (SN1) and acts in the sense of starting the piston-dosing cylinder (D3), which aspirates the sterilized and degassed liquids from the lower part of the storage tank of the degassed products (40), through the duct (46), under the control of the valve (46A) and delivers them, at atmospheric pressure, to the packaging system through the duct (47), controlled by the valve (48).

Figure 5 is a schematically frontal illustration of the fourth building variant of the process and equipment for sterilizing and removing oxygen from liquid foods at low temperature through decompression and/or great linear or rotatory accelarations, which includes a device that acts according to the second core principle of the object of this Patent and which is purposed to destroy the cells of the contaminative microorganisms of the liquids to be treated, conformed in liquid thin sprays or droplets by subjecting them to great linear accelerations of up to 1,000 times the value of the gravity on earth surface in a few milliseconds; in this building variant, due to the specific characteristics of the blower, which performs predominantly great linear accelerations over the droplets of the liquids to be treated, it simultaneously causes their large expansion by the great decompression of the vessel where they are thrown to, thus, adding up the sterilizing effects of the two core principles, object of this Patent, which in this building variant, are inseparable and produce complete sterilization of the liquids to be treated, at cold, in fractions of a second, continuously and economically; in it, we can see the four-blade blower (65), with the rotor (66), may it have any number of blades which turn towards the curvilinear arrow (X-Y); we can also see the injector nozzles (67), (67A), (67B) and (67C) through which the liquids to be treated are conformed in thin liquid sprays or droplets and are injected into the blower (65), like a rectilinear spray towards the opposite direction of the blades of the rotor (66); we can also see the admission valves (68), (68A), (68B) and (68C), controlled by the specific software, fed by the conduit (74) that receives the liquids to be treated at high pressures by the liquid compression system (73), which can work by compression pistons, by rotary pumps or by any other suitable way; the liquid compression system (73) receives the liquids to be treated through the duct (72), being that the previous gasification tank of the liquids to be treated (71), receives the liquids to be treated through the feeding duct (69) and sterile gas through the gas feeding duct (70).

In this Figure 5, we can also see the liquids treated by the very high accelerations imposed on them by the rotation of the rotor (66), of the blower (65), together with the great expansion of the gases insufflated in them, they leave the blower (65), through the exit conduit of the treated liquids (75), by the effects of its flow exit pressure and of the aspiration performed by the piston-aspirating cylinders (76) and (76A), which, operating in counter-phase, keep the very low pressures inside the blower (65) constant; we can also see the valves (75A) and (75B), that also operate in counter-phase together with the valves (77) and (77A) which, in an operational counter-phase set, control the input and output, made alternately, of the liquids to be treated and of their gases inside the piston-aspirating cylinders (76) and (76A), whose exits are done through the exit duct (78), through where they go to the tank of treated products (79) and, later, to bottling, through the exit duct (80), being that the tank of treated products (79) keeps inside a pressure that is slightly higher than 1 atmosphere, as its higher part communicates with the environment air or with the recuperation device of these gases, kept at atmospheric pressure, through the duct (81) and the sterilizing filter (F4).

The work of such equipment is the following: - the liquids to be treated, which enter the previous gasification tank of the liquids to be treated (71), through the feeding duct (69), under the sterile gas pressure that enters it through the gas feeding duct (70), are gasified slowly, being the amount of gas dissolved due to the sterile gas pressure inside the mentioned tank and to the solubility of the gas used, usually Nitrogen of food purity degree; through the duct (72), the gasified liquids lying inside the previous gasification tank of the liquids to be treated (71) enter the liquid compression system (73), consisted of compression pistons, rotary pumps or any other suitable way of performing high pressures over the liquids to be treated and insufflating the gases inside the contaminative organisms present in them; such liquids gasified at high pressures of up to 200 kilograms per square centimeter, are taken through the duct (74), to the injection nozzles (67), (67A), (67B) and (67C), through which the liquids to be treated are injected inside the blower (65), conformed in liquid thin sprays or droplets, towards the opposite direction of the rotation of the blades of the rotor (66), being that the entries of these liquids to be treated inside the blower (65) are controlled by the admission valves (68), (68A), (68B) and (68C); by means of the exit conduit of the treated liquids (75), the aspiration of the treated liquids and their gases is done, which is carried out by the piston-aspirating cylinders (76) and (76A), which operate in counter-phase and, thus, very low pressures are kept inside the blower (65), being, therefore, together with the effects of the great accelerations and the great and sudden gas expansions on the microorganisms of the liquids to be treated; the organization of the valves (75A) and (75B), together with the valves (77) and (77A), which operate in counter-phase, makes the liquids to be treated, aspirated by the aspirating pistons (76) and (76A), to be gasified again; the treated liquids, after having been sterilized, go through the exit duct (78) to the tank of treated products (79), where the pressure over the liquids to be treated is kept slightly higher than the local atmospheric pressure, through the duct (81) and sterilizing filter (F4) and to bottling, through the exit duct (80).

Figure 6 is a schematically over view of the fifth building variant of the process and equipment for sterilizing and removing oxygen from liquid foods at low temperature through decompression and/or great linear or rotatory accelarations; from this Figure, the set of the pieces of equipment that comprise the innovative device and its work are described, which acts according to the second core principle of the object of this Patent, which performs great linear and rotatory accelerations over the liquids under treatment inside it as it creates, in them, a high degree of turbulence and that is purposed to sterilizing liquid foods by the destruction of the cell of the contaminative microorganisms in these liquids to be treated, at cold, at atmospheric pressure or at any pressure acquired by the previous gasification of such liquids, slowly or quickly.

Here are the differences between this fifth building variant and the fourth one, shown in Figure 5:
A - the imposition of great linear, rotatory accelerations, or both combined, is performed by:
   I - shocks between the liquids and the rotors,
   II - shocks between the liquids themselves in the turbulent areas and in their interfaces,
   III - shocks between the liquids and the other parts of the equipment.
   These violent microbicidal shocks are done when the liquids being treated inside the device are being subjected to the great and chaotic accelerations, which are imposed on them by the rotation of the rotors that operate in high rotations, towards the opposite direction and that create a high turbulence level;
B - whereas in the fourth building variant the liquids conformed in thin sprays of droplets receive one single and great frontal shock with the rotor pieces, in this building variant, the liquids receive thousands of shocks among themselves, with the rotors, with the walls and with the other whirling devices of the equipment;
C - this building variant does not operate in a continuous way, but in batches.

So that the turbulence be intense and chaotic and for avoiding the formation of preferable flowing channels of the liquids into the devices as well as the formation of stationary waves, the central and satellite rotors have their speeds constantly changed, as their engines have their speeds constantly changed by electromagnetic controls of "PWM - Pulse Width Management" type, that randomly change them by means of an electronic device that generates randomized order pulses.

In Figure 6 we can see the turbulence sterilizer (87), the central rotor (85) and a set of 4 satellite rotors (84A), (84B), (84C) and (84D), may such set be consisted of any number of satellite rotors, which are contained inside a carcass (82), and they have turbulent internal projections (83A), (83B), (83C) and (83D), whose functions are to increase the turbulence of the liquids produced by the central rotor (85) and by the satellite rotors (84A), (84B), (84C) and (84D), which turn towards the opposite direction of the central rotor (85), at very high rotational speeds, varied at random by the command PWM in their engines, such rotational speeds being as great as 200 times per second; we can also see the exit duct (90) of the tank of the liquids to be treated (89), the exit controlling valve (90A), the dosing-piston compressor (91), the entry duct of the liquids to be treated (92), which, through the valve (92A), feeds the liquids under pressure, the turbulence sterilizer (87), by its lower part, being that these liquids to be treated may have been previously gasified, by any means, but, preferably, slowly, by the presence of sterile gas, under pressure in the storage tank of the liquids to be treated (89), which, through the duct (88), is fed with sterile gas; the temperatures of the liquids to be treated may be close to the freezing point of the liquids to be treated; we can also see the exit duct of the treated liquids (86), which through the valve (86A), takes them, after the process that takes place inside the turbulence sterilizer (87) to the tank of treated liquids (93), from which, the process gases that come from the treated liquids due to the fact that the internal pressure inside this tank is lower than the pressure inside the turbulence sterilizer (87), go through the duct (94) and the one-way conductor valve (94A), to the fluid compressor (95) that compresses these fluids, consisted of process gas and vapors from the treated liquid and, through the fluid recirculating duct (95A), takes them to the tank of products to be treated (89),bringing economy to it due to this recirculation of the process gas; inside the tank of the treated liquids (93) the treated liquids rest at low pressure as long as it is needed for losing as many gases as possible, which were previously insufflated and that get accumulated in the upper part of the tank while the condensed liquids get accumulated in the lower part of the same tank, from where they leave, by gravity and by pressure force of the gases accumulated in the upper part of the tank through the duct (93A) and of the controlling valve (93B) and they go to the liquid-gas separator (96), from which the separated gases follow through the duct (96A) and through the one-way conductor valve (96B) and go to the compressor (95) that aspirates them and through the gas recirculation duct (95A), injects them into the tank of the liquids to be treated (89), being that this gas recirculation produces economy of the processing gas; the one-way conductor valves (94A) and (96B) stop the fluids from returning and keep the differential pressures of the liquid treatment process.

The work of the turbulence sterilizer (87) is the following: - may it be with the rotors stopped, without liquids inside it and with the internal volume of its carcass (82) being filled with processing gas, usually Nitrogen, at processing pressure, the liquids to be treated penetrate the lower part of the turbulence sterilizer (87) through the duct (92), under the control of the valve (92A), at a pressure determined by the specific software, between 5 and 10 kilograms per square centimeter, pressure that was imposed by the previous gasification and by the action of the dosing-piston compressor (91), which aspirates them from the liquids to be treated (89), through the duct (90) and valve (90A) and injects them into the lower part of the turbulence sterilizer (87) through the duct (92) and valve (92A); while the liquids to be treated are penetrating the turbulence sterilizer (87), through its lower part, the gases present inside the carcass (82), due to the pressure performed by the pressure of the liquids to be treated that are entering, leave it through the duct (92B), located in its higher part and they are taken, through the one-way conductor valve (92C), to the tank of liquids to be treated (89), until the moment that the interior of the turbulence sterilizer (87) is completely filled with gasified liquid only and at pressure; at this moment, the engines of the rotors are switched on and the liquid remains inside the turbulence sterilizer (87) for the period of time determined experimentally according to the liquid to be treated, the type and level of contamination and temperature, with these periods ranging between 1 and 10 minutes.

The treated liquids that were separated by the gas-liquid separator (96) are drained from it through its lower part, through the duct (97) and, under the control of the valve (97B), they go to the storage tank of treated and degassed liquids (98), from where they go to the packaging process through the duct (98A), under the control of the valve (98B), being that the gases remaining in the treated and degassed liquid that get accumulated in the higher part of the storage tank of treated and degassed liquids (98) leave it through the duct (99) being aspirated by the compressor (100) that, through the duct (100A), are injected into the tank of liquids to be treated (89), for an economical recuperation of the processing sterile gas.

Inside the turbulence sterilizer (87) the liquids to be treated are subjected to great turbulence so that they shock violently among themselves in the fractal regions of turbulence, with the central rotor (85), with the satellite rotors (84A), (84B), (84C) and (84D), with the internal whirling projections (83A), (83B), (83C) and (83D) and with the walls of the turbulence sterilizer (87) and, in this process, they receive abrupt, linear or rotatory, accelerations thousands of times, of around 500 times the gravity on the Earth's surface, besides the shocking waves and the violent inversions of the movement direction and other typical phenomena of the turbulence movement, so that the cytoskeletons and the cell membranes of the contaminative microorganisms of the liquids being treated are destroyed and the liquids become sterilized; the following decompression, which takes place inside the treated liquid tank (93) increases the process safety.

Figure 7 is a schematically frontal view of the sixth building variant of the process and equipment for sterilizing and removing oxygen from liquid foods at low temperature through decompression and/or great linear or rotatory accelarations, object of this Patent; it refers to a rotary sterilizing device, illustrates its composition and describes its work, which acts in compliance with the second core principle of the object of this Patent, by imposing, many times, great tangential accelerations, at increasingly inversions of speeds, which reach about 500 times the gravity on Earth's surface and act over the cell membranes and cytoskeletons of the contaminative microorganisms of the liquids to be treated, by sterilizing, at cold, the liquids conformed in droplets or thin sprays, at atmospheric pressure or at any pressure, acquired by previous gasification; such device operates continuously; in this Figure 7, we can see the liquid sterilizer by great tangential accelerations (101), that is consisted of a carcass (102), which shelters the upper rotary grooved disk (103), together with its movement axle (104), which has, in its central part, a hole that comprises the injection duct of the liquids to be treated (105), whose location makes it to inject such liquids directly over the center of the lower rotary grooved disk (107), that is together with its movement axle (108); the upper rotary grooved disk (103) and the lower rotary grooved disk (107) turn at high rotation speeds of about 200 revolutions per second, in opposite directions, being that the liquid treated by the liquid sterilizer by great tangential accelerations (101) leaves it through the exit duct of treated liquids (110), through the valve (110A) and duct (110B), under the aspiration of any decompression system, not shown in this Figure 7, and which can be any of the building variants shown in the previous figures.

The upper rotary grooved disk (103) and the lower rotary grooved disk (107) are assembled in parallel, so that the grooves (S), (S1)...and (SN) of the lower rotary grooved disk (107), which are located complementarily with the concavities (C), (C1)...and (CN) of the upper rotary grooved disk (103), being kept in parallel at the distance "d", forming the space "E", which is run along by the liquid to be treated, at first as droplets or fine sprays and, soon afterwards, in a chaotic, turbulent and extremely complex way, here represented by the dotted line (115), when both disks are in rotation during the work of the liquid sterilizer by great tangential accelerations (101).

The space "E" is also run along by the ultraviolet light beam (113) generated by the ultraviolet light source (112), and by the white light beam (114), generated by the white light source (111), usually consisted of a battery of Xenon lamps; such electromagnetic radiation beams can go along the space "E" because the grooves (S), (S1)...and (SN) of the lower rotary grooved disk (107) and of the concavities (C), (C1)...and (CN) of the upper rotary grooved disk (103) have inclinations of 90°, due to the angles "A", of 90°, which enables reflections of the referred light beams, since their incidence angles are the same as their reflection angles; thus, the white light beam (114) or the ultraviolet light beam (113) will reach the internal surfaces of the grooves (S), (S1)...and (SN), and of the concavities (C), (C1)...and (CN), which are covered by a resin or ceramic coating that contains nanostructured particles able to generate a high bactericidal power heterogeneous photocatalysis, such as Silver, Titanium Dioxide, Zirconium Dioxide, among others, whose bactericidal powers are countless times multiplied when their surfaces are bombarded by such electromagnetic radiations.

The work of the liquid sterilizer by great tangential accelerations (101) is the following: - the injection duct of the liquids to be treated (105), injects such liquids to be treated, here simply represented by the dotted line (115), as fine sprays or droplets, at pressures between 5 and 20 kilograms per square centimeter, and in amounts determined experimentally, straight over the center of the groove (S), of the lower rotary grooved disk (107) and, thus, the liquids to be treated (115), as they reach this point (P), are subjected to rotation efforts, which perform rotary tangential accelerations over them; due to the centrifugal effect, the liquids to be treated (115) start to move along the surfaces of the groove (S), of the lower rotary grooved disk (107), and are thrown onto the surface of the concavity (C) of the upper rotary grooved disk (103), at the point (P1), which turns towards the opposite direction of the lower rotary grooved disk (107), with the absolute value of the tangential speed being higher at the point (P1), where the liquid being treated hits the surface of the concavity (C); such speed is higher, once it is more distant from the common center of rotation of the system of combined disks and, besides being higher, it is in the opposite direction, which causes great rotatory and linear accelerations in such liquids as they invert their great speeds of rotation and linear movement, in milliseconds, process which is repeated at values that are increasingly more absolute, as many times as are the concavities (C)...(CN) and the grooves (S), (S1)...(SN), of the upper rotary grooved disk (103) and of the lower rotary grooved disk (107) respectively.

In this way, the liquids being treated, conformed as fine sprays or droplets, at low temperatures and high pressures, which increase their viscosity and also the viscosity of the cytoplasm of the contaminative microorganism, as they have to invert their rotational speeds in milliseconds, receive huge successive and repetitive accelerations that destroy the cytoskeleton, the cell membranes and cell cytoplasmic of the contaminative microorganisms of the liquids being treated, causing their death; however, soon after such efforts, the contaminative microorganisms of the liquids to be treated are taken through the exit duct of the treated liquids (110), through the flow controlling valve (110A), through the duct (110B), to any decompression vessel, not shown in this Figure 7, in which they are subjected to great decompressions, so that the combination of these two effects is lethal to all and every kind of microorganisms, therefore acquiring, at cold, the absolute and reliable sterilization of the treated liquids, with total preservation of their original characteristics.

## Claims

1. Process and equipment for sterilizing and removing oxygen from liquid foods at low temperature through decompression and/or great linear or rotatory accelerations, intended for oxygen sterilization and/or removal and its substitution or not with carbon dioxide and/or nitrogen from any liquid food and liquid extracts of any parts of vegetables, with long shelf life, preserving their natural colors, flavors and odors, and their enzymes, vitamins, antioxidizers and other phyonutrients, with no need for later refrigeration, and homogenizing vegetal extracts by destroying their cell walls, cell membranes and organelles, **characterized by** being a process performed under low temperatures, which can be close to the freezing points of the liquids to be treated, using sudden and great decompression to explode and kill contaminant micro-organism cells such as bacteriae in their living forms or encapsulated, fungi and their spores, as well as protozoan and viruses; sudden and great expansion of the gases present in cytoplasmatic liquids and in liquids from inside the organelles of those micro-organisms, be them natural or artificially insufflated, by previous gasification, at whichever pressures, performed slowly or quickly; and/or killing contaminant micro-organisms by physical destruction of their cytoskeleton, cell membranes and organelle architectures by causing, in fractions of seconds, large linear or rotating accelerations, or any of their combinations; these actions may be supported before, during or afterwards by ultrasound, microwave and heterogeneous photocatalysis irradiation, performed by irradiating white light and/or ultraviolet light over resin-covered or ceramic surfaces with nanostructured particles, singly applied or combined in any way, and sudden vaporization of intracell water, being said actions performed by especially developed equipment for that purpose.

2. Process and equipment for sterilizing and removing oxygen from liquid foods at low temperature through decompression and/or great linear or rotatory accelerations, equipment used to perform the process as defined by claim 1, **characterized by** being formed by a set of equipment composed by cylinders (1, 3A, 33, 76, 76A), decompression tanks (18, 38) and exhausting blowers (19, B1) producing decompression, to promote sudden and great decompression of the liquid to be processed, and a set of equipment composed by a high-rotation blower (65), turbulence generator (87) and rotating disks for tangential accelerations (101) to promote large linear or rotating acceleration, or any of their combinations.

3. Process and equipment for sterilizing and removing oxygen from liquid foods at low temperature through decompression and/or great linear or rotatory accelerations of claim 2, **characterized by** the parts of the equipment where the liquids to be treated by sudden and great decompression, large linear or rotating acceleration or any of their combinations, or vortexing, being self-sterilizable.

4. Process and equipment for sterilizing and removing oxygen from liquid foods at low temperature through decompression and/or great linear or rotatory accelerations of claims 1 and 2, **characterized by** all equipment and all embodiments of the process being commanded, controlled and activated by specific software working by means of equipment automation.

5. Process and equipment for sterilizing and removing oxygen from liquid foods at low temperature through decompression and/or great linear or rotatory accelerations of claims 1 and 2, **characterized by** the sudden and great decompression being caused by continuously ejecting the liquids to be treated as jets, inside vessels with pressures as low as 5/1000 atmospheric pressure, being said low pressures preferably maintained by suction as performed by the blower (19) or alternatively by cylinders substituting it.

6. Process and equipment for sterilizing and removing oxygen from liquid foods at low temperature through decompression and/or great linear or rotatory accelerations of any of claims 1 and 2, **characterized by** the sudden and great decompression of liquids to be treated, which were previously, quickly and artificially gasified by the compression of said liquids, together with the gases to be insufflated, performed by sets of compressors (C2, 16, D1, 73), rotating pumps (15) or, alternatively, appropriate cylinders or injectors.

7. Process and equipment for sterilizing and removing oxygen from liquid foods at low temperature through decompression and/or great linear or rotatory accelerations of claims 1 and 2, **characterized by** the sudden and great decompression being performed in fractions of seconds, with the liquids to be treated in the form of fine jets or droplets, while said liquids are simultaneously submitted to linear or rotating acceleration, or any combinations of said accelerations, of about 1000 times the gravity acceleration over the Earth surface, by frontal, oblique or tangential shocks with the moving parts of the blower (65), turbulence generator (87) and rotating discs for tangential acceleration (101) equipment; wherein said acceleration is applied previously to the sudden and great decompressions; which may reach final pressures up to 20,000 times lower than pressures as previously existing over said liquids.

8. Process and equipment for sterilizing and removing oxygen from liquid foods at low temperature through decompression and/or great linear or rotatory accelerations of claim 1, **characterized by** the sudden and great decompression removing oxygen as dissolved in liquid food to be treated or contained inside the cytoplasm and organelles of contaminating micro-organisms as present therein, being or not followed by gasification by carbon dioxide or nitrogen.

9. Process and equipment for sterilizing and removing oxygen from liquid foods at low temperature through decompression and/or great linear or rotatory accelerations of claim 1, **characterized by** the sudden and great decompression being supported before, during or afterwards by microwave irradiations, solely applied or combined in any form, with frequency of 2,450 MHz, ultrasound with frequencies between 30 kHz and 5 MHz and heterogeneous photocatalysis caused by the irradiation of white and/or ultraviolet light over surfaces covered by resins or ceramics, with nanostructured particles, of silver, titanium dioxide, zirconium dioxide, tin dioxide and other similar compounds.

10. Process and equipment for sterilizing and removing oxygen from liquid foods at low temperature through decompression and/or great linear or rotatory accelerations of claim 1, **characterized by** the fact that linear or rotating acceleration of liquids, in the form of droplets or jets, may be performed with them under atmospheric pressure or previously, quickly and artificially gasified at any pressure.

11. Process and equipment for sterilizing and removing oxygen from liquid foods at low temperature through decompression and/or great linear or rotatory accelerations of claim 1, **characterized by** the slow gasification of said liquids being performed in gasification vessels (14, 25) under pressures of up to 200 kg/cm², being carbon dioxide and nitrogen gases slowly injected until reaching high pressures, thus remaining for as long as required, specifically for each kind of gas and liquid.

12. Process and equipment for sterilizing and removing oxygen from liquid foods at low temperature through decompression and/or great linear or rotatory accelerations of claim 1, **characterized by** submitting any vegetal extracts, including juices from germinating seeds, to sudden and great decompressions to obtain "super foods", by keeping all natural active ingredients and characteristics from the plants to produce cold sterilized vegetal extracts, to be stored under refrigeration, with appropriate shelf life for the commercialization of natural food.

13. Process and equipment for sterilizing and removing oxygen from liquid foods at low temperature through decompression and/or great linear or rotatory accelerations of claim 1, **characterized by** submitting grape juice to sudden and great decompressions and/or great linear, rotating or combined accelerations in any form, to cold sterilize them before fermentation, for the production of wines of any kind, with subsequent inoculation of pure and specific fermentative strains with full control over fermentation results.

14. Process and equipment for sterilizing and removing oxygen from liquid foods at low temperature through decompression and/or great linear or rotatory accelerations of claim 1, **characterized by** the fact that the temperatures of liquids to be treated may be high, up to specific values for each kind or group of enzymes, to deactivate undesirable extra-cell enzymes, before or after submitting said liquids to process treatments, by heating said liquids, water jacket or any other appropriate forms.

15. Process and equipment for sterilizing and removing oxygen from liquid foods at low temperature through decompression and/or great linear or rotatory accelerations of claims 1 and 2, **characterized by** the sudden and great decompression being caused by a large increase in the volume above the surface of liquids to be treated, contained inside decompression vessels (1, 1A, 31) by means of piston displacement (3, 3A, 33) inside them, from its position, next or near to the liquid surface.

16. Process and equipment for sterilizing and removing oxygen from liquid foods at low temperature through decompression and/or great linear or rotatory accelerations of claims 1 and 2, **characterized by** the sudden and great decompression being caused by low pressure as existing inside decompression vessels, wherein liquids to be treated are injected, and performed by means of suction of gases as contained inside said decompression vessels (18) by a blower (19).

17. Process and equipment for sterilizing and removing oxygen from liquid foods at low temperature through decompression and/or great linear or rotatory accelerations of claim 1, **characterized by** increasing the shelf life of products after treatment, dismissing the need for refrigerated stocking.

18. Process and equipment for sterilizing and removing oxygen from liquid foods at low temperature through decompression and/or great linear or rotatory accelerations of claim 1, **characterized by** the fact that the proteins of the milk treated that way are not denatured and it serves for the industrialization of any dairy product.

19. Process and equipment for sterilizing and removing oxygen from liquid foods at low temperature through decompression and/or great linear or rotatory accelerations of claim 1, **characterized by** sudden and great decompressions and/or great linear or rotating accelerations with the help of heterogeneous photocatalysis caused by the irradiation of white light and/or ultraviolet light over surfaces covered with resins or ceramics, containing nanostructured particles of silver, titanium dioxide, zirconium dioxide, tin dioxide and other similar compounds, causing the death of 100% of micro-organisms such as Staphilococcus aureus, Escherichia coli, Salmonella typhimurium and other heat-tolerant coliforms.

20. Process and equipment for sterilizing and removing oxygen from liquid foods at low temperature through decompression and/or great linear or rotatory accelerations of claim 1, **characterized by** sudden and great decompression to sterilize beers and subsequently compress them again to atmospheric pressure, with no need of later preservation under refrigeration.

21. Process and equipment for sterilizing and removing oxygen from liquid foods at low temperature through decompression and/or great linear or rotatory accelerations of claim 2, **characterized by** the decompression set containing a decompression tank (1), piston (3), shaft (2), tank of liquids to be treated (4), duct (4A), feeding duct for a liquid for treatment (4B), valve (4C), dosing cylinder (D), duct (4E), valve (4D), outlet duct for treated liquid (5A) and valve (5B); deposit tank for treated liquid (5), air sterilizing filter (F2), duct (5C), air sterilizing filter (F1), oil pump (8), decompression hydraulic cylinder (7), piston (7A), sterile gas tank (6), circulation duct for sterile gas (6B), duct (6A), strong seal gaskets (10), sealing ring (11) for the piston (3) and aseptical sealing (9); where Volume V1 corresponds to the volume of liquid to be treated at each decompression cycle and Volume V2 corresponds to about 100 to 200 times Volume V1, corresponding to the decompression volume of the equipment.

22. Process and equipment for sterilizing and removing oxygen from liquid foods at low temperature through decompression and/or great linear or rotatory accelerations of any of claims 2 and 21, **characterized by** the decompression set also containing: decompression tank (1A), piston (3A) and shaft (2A), deposit tank for sterile gas (G), duct (13), duct (13A), duct (13B), valve (13C), medium pressure compressor (C2), duct (13D), deposit tank for liquids to be treated (14), sterile gas tank (G1), duct (G3), duct (14E), valve (14C), high pressure rotating pump (15), dosing valve (15A), valve (14D), high pressure compressor (16), dosing valve (16A), set of white and/or ultraviolet light sources (17C), transparent window (17A), microwave source (17D), transparent window for microwaves (17B); wherein the walls of the decompression tank (1A) recovered by ceramic or polymeric films containing nanostructured heterogeneous photocatalytic compounds, set of ultrasonic transducers (17), outlet duct for treated liquids (12), valve (12B), gas-liquid separator (12A), compressor (C1) and duct (G3).

23. Process and equipment for sterilizing and removing oxygen from liquid foods at low temperature through decompression and/or great linear or rotatory accelerations of any of claims 2 and 22, **characterized by** the decompression set containing: continued decompression tank (18), high rotation exhauster (19), outlet duct for gases and liquids (19A), separating cyclone for gases and liquids (20), outlet duct for condensed liquids (20A), outlet duct (20B), compressor (K2), tank for treated liquids (21), outlet duct for treated liquids (21A), outlet duct for gases (20C), pressure control valve (22), equalization tank for process pressures (23), pressure controlling valve (23A), fluid compressor (K1), gas recirculation duct (24), pressure control valve (29), tanks for products to be treated (25), deposit tank for sterile gases (26), pressure control valve (26A), duct (26B), flow control valve (27) and feeding duct (28); wherein the high rotation exhauster (19) may be substituted with a set of one or cylinders and pistons.

24. Process and equipment for sterilizing and removing oxygen from liquid foods at low temperature through decompression and/or great linear or rotatory accelerations of any of claims 2 and 23, **characterized by** the decompression set containing: tank for products to be treated (30), duct (30A), recovery duct for liquids (39A), air sterilizing filter (F3), duct (30F), duct (30B), inlet valve (30C), piston dosing cylinder (D1), duct (30D), outlet valve (30E), decompression tank (31), shaft (32), piston (33), piston (33A), hydraulic cylinder (33B), high sealing gasket (34), aseptic cover (35), gas circulation duct (36), sterile gas tank (GE1), duct (37), valve (37A), gas outlet tank (38), duct (38A), high rotation blower (B1), duct (38B), gas and liquid separator (S), non-returning valve (39), level sensor (SN), piston dosing cylinder (D2), duct (38A), valve (38B), duct (38C), valve (38D), storage tank for degasified products (40), oil pump (43), piston (44), hydraulic cylinder (44A), piston (45), shaft (41), aseptic cover (42), dosing piston cylinder (D3), duct (46), valve (46A), duct (47), valve (48) and level sensor (SN1); to remove cold, forbid its return, in a single operation between 90% and 95% and, in two operations, up to 99% of oxygen and/or any other gas dissolved in liquids to be treated, as well as within full vegetal cells, suspended in said liquid and within contaminant micro-organism cells and sterilize said liquids under low temperatures, with no loss of nutrients.

25. Process and equipment for sterilizing and removing oxygen from liquid foods at low temperature through decompression and/or great linear or rotatory accelerations of claim 2, **characterized by** the blower (65), to sterilize liquids to be treated cold, by destruction of cell membranes of micro-organisms, by large linear accelerations, containing: four-blade rotor (66), wherein the number of blades may vary, injection peaks (67), (67A), (67B) and (67C), inlet valves (68), (68A), (68B) and (68C), piping (74), liquid compressor system (73), which may be activated by compression pistons, rotating pumps or any other appropriate means; duct (72), previous gasification tank for liquids to be treated (71), liquid storage duct (69), gas feeding duct (70), outlet piping for treated liquids (75), piston aspirator cylinders (76) and (76A), valves (75A) and (75B), valves (77) and (77A), piston aspirating cylinders (76) and (76A), outlet duct (78), tank for treated products (79), outlet duct (80), duct (81) and sterilizing filter (F4).

26. Process and equipment for sterilizing and removing oxygen from liquid foods at low temperature through decompression and/or great linear or rotatory accelerations of claim 2, **characterized by** imposing large turbulence, by linear, rotating accelerations, their combinations and shock of liquids in treatment between them and with parts of the equipment; containing a turbulence sterilizer (87), central rotor (85), satellite rotors (84A), (84B), (84C) and (84D), and can be any number of satellite rotors, turning contrary to the central rotor (85) under very high rotation speeds, randomly changed by the "PWM" command in their motors under rotation speeds of up to 200 revolutions per second; frame (82), internal swirling projections (83A), (83B), (83C) and (83D), tank for liquids to be treated (89), outlet duct (90), outlet control valve (90A), dosing compressor by piston (91), inlet duct for liquids to be treated (92), valve (92A), duct (88), outlet duct for treated liquids (86), valve (86A), tank for treated liquids (93), duct (94), unidirectional conduction valve (94A), fluid compressor (95), fluid recirculation duct (95A), duct (93A), control valve (93B), liquid/gas separator (96), duct (96A), unidirectional conduction valve (96B), duct (97), valve (97B), deposit tank for treated and degasified liquids (98), duct (98A), valve (98B), duct (99), compressor (100) and duct (100A).

27. Process and equipment for sterilizing and removing oxygen from liquid foods at low temperature through decompression and/or great linear or rotatory accelerations of claim 2, **characterized by** the liquid sterilizer by large tangential accelerations (101), imposing to treated liquids great tangential accelerations, in speed inversion sequences, containing in a frame (102) a moving axis (104), sealing gasket (106), moving axis (108), gasket (109), upper rotating channeled disc (103), with concavities (C to CN) and a lower rotating channeled disc (107) with channels (S to SN) rotating counterwise, separated by the distance (d), forming between them the space (E), which is crossed by the liquid under treatment (115) by the ultraviolet light beam (113) and by the white light beam (114); ultraviolet light source (112), white light source (111); injection duct for liquids to be treated (105); outlet duct for treated liquids (110), valve (110A), duct (110B).

28. Process and equipment for sterilizing and removing oxygen from liquid foods at low temperature through decompression and/or great linear or rotatory accelerations of claims 2 and 27, **characterized by** an upper rotating channeled disc (103) with concavities (C to CN) and a lower rotating channeled disc (107) with channels (S to SN) being covered by resin or ceramic coating, containing nanostructured particles of substances able to generate heterogeneouos photocatalysis with high bactericidal power, such as silver, titanium dioxide, zirconium dioxide and others, which bactericidal powers are multiplied numerous times when their surfaces are bombarded by said electromagnetic radiations, being the angle (A) of channels and concavities of 90°.
